# EUROPÄISCHE PATENTSCHRIFT

(11) **EP 2 464 612 B1**
(45) Veröffentlichungstag und Bekanntmachung des Hinweises auf die Patenterteilung: **04.07.2018**
(21) Anmeldenummer: 10743020.9
(22) Anmeldetag: 15.07.2010
(51) Int. Cl.: C04B 28/10, C04B 28/02, C04B 111/00, C04B 111/40

(54) **FORMMASSE ZUR HERSTELLUNG VON FORMTEILEN**
MOLDING COMPOUND FOR PRODUCING MOLDED PARTS
MATIÈRE MOULABLE POUR LA FABRICATION DE PIÈCES MOULÉES

(30) Priorität: 16.07.2009 DE 102009033362
(43) Veröffentlichungstag der Anmeldung: 20.06.2012
(73) Patentinhaber: Kiss, Johann, 2435 Ebergassing (AT)
(72) Erfinder: KISS, Johann, A-2435 Ebergassing (AT)
(74) Vertreter: Ellmeyer, Wolfgang
(86) Internationale Anmeldenummer: PCT/EP2010/004317
(87) Internationale Veröffentlichungsnummer: WO 2011/006660

(56) Entgegenhaltungen:
- EP-A1- 1 069 089
- EP-A1- 1 178 086
- AT-B- 149 677
- DE-A1- 19 605 701
- DE-C- 967 902
- GB-A- 491 973
- GB-A- 191 006 241

## Beschreibung

### Technisches Gebiet:

Die vorliegende Erfindung betrifft ein Verfahren zur Herstellung von auf natürlichen Bindemittelsystemen basierenden Formmassen für die Herstellung, Behandlung, Beschichtung, Ausrüstung oder Veredelung eines Körpers, damit hergestellte oder behandelte Formmassen und Formteile sowie Zusammensetzungen zur Herstellung solcher Formmassen.

Die erfindungsgemäße Zusammensetzung und die daraus hergestellten Formmassen eignen sich als Werkstoff oder Behandlungsmasse für eine Reihe von Anwendungsmöglichkeiten, beispielweise zur Verwendung für die Herstellung von Baustoff- und Leichtbauplatten, für die Erzeugung einer Antirutschbeschichtung auf einem Körper, beispielsweise einer Antirutschmatte bei einem Kraftfahrzeug, als Verbundschicht, Isolationsschicht oder Füllschicht mehrschichtiger Körper oder für die Herstellung, Behandlung, Beschichtung, Ausrüstung oder Veredelung eines Körpers mit verbesserten Brandschutzeigenschaften.

### Stand der Technik:

Formteile kommen in den unterschiedlichsten Bereichen der Industrie zum Einsatz und werden beispielsweise in der Automobilindustrie, in Bussen, Schienenfahrzeugen oder Flugzeugen für Verkleidungsteile und anderes Interior eingesetzt. In Gebäuden finden Formmassen beispielsweise Anwendung als Verbundstoffe oder Isolierstoffe. Je nach Anwendungsgebiet ist es erforderlich, dass die Materialien möglichst leicht und zugleich formstabil sind. Viele der zur Zeit verwendeten Verbundstoffe, insbesondere solche der mobilen Industrie, besitzen einen komplexen Aufbau und sind extrem aufwändig und teuer in deren Herstellung. Zur Reduzierung von Gewichten und Erhaltung akustischer Eigenschaften werden zum Teil bis zu zehn Einzelschichten unterschiedlichster Werkstoffe eingesetzt, um die erwünschten Formteile oder die daraus erzeugten Produkte herzustellen.

Neben der komplexen Herstellungsweise spielen auch Fragen zum Recycling oder zur Gesundheitsgefährdung der einzelnen Werkstoffe eine Rolle. Viele der verwendeten Werkstoffe lassen sich nur mit aufwändigen Verfahren recyclen bzw. nach Gebrauch entsorgen und stellen nicht unerhebliche Umweltprobleme dar. Hinzu kommen "verdeckte" Produkteigenschaften, die sowohl in als auch nach der Anwendung bedenklich sind, wozu beispielsweise Brandschutz- oder Flammschutzmittel, Lösungsmittel- und Weichmacherbestandteile gehören.

Ein weiterer, nicht unbedeutender Faktor ist die dauerhafte und nachhaltige Verfügbarkeit von Rohstoffen zur Herstellung der Formteile. Erdölgebundene Rohstoffe stehen mittel- bis langfristig nur noch in begrenztem Umfang zur Verfügung. Es ist abzusehen, dass die daraus erzeugten Produkte wirtschaftlich unter Druck geraten und sehr teuer werden, weil sich die Preise nach Verfügbarkeit der schwindenden Rohstoffressourcen erfahrungsgemäß entsprechend entwickeln werden. Aus diesem Grund sind Bestrebungen angebracht, erdölgebundene Rohstoffe und daraus hergestellte Formteile zu ersetzen und über ökologisch verwertbare, natürliche Rohstoffe anzufertigen, die nahezu unbegrenzt und dauerhaft in der Natur verfügbar sind.

Die bislang bekannten Verfahren, wie sie beispielsweise in der DE 31 05 596 C2, der DE 23 19 759 A, der US 1,030,302, der DD 208 970 B oder der US 5,076,986 beschrieben sind, stellen erste Ansätze dar, können jedoch aus den unterschiedlichsten Gründen nicht befriedigen. Zum einen werden nach wie vor Zuschlagstoffe verwendet, die ökologisch bedenklich sind, zum anderen werden eine Reihe von erwünschten Produkteigenschaften nicht erfüllt. Zwar kommen auch hier zum Teil Naturmaterialien zum Einsatz, diese müssen jedoch nach wie vor in energie- und arbeitsaufwändigen Prozessen verarbeitet werden. Auch schließen sie nicht den nachhaltigen, ökologischen Material- und Produktkreislauf.

In der EP 0 833 805 B1 wird ein Verfahren zur Herstellung eines Betonformteils beschrieben, bei dem ein Glanzpigment in Form einer Suspension in wässrigem Kaseinleim eingesetzt wird. Dabei wird auf den Grundkörper eine nicht abgebundene Vorsatzschicht aufgebracht, die Bimssteinpulver enthalten kann.

In der AT 149 677 B wird ein Verfahren zur Herstellung poröser Kunststeinmassen beschrieben, bei dem zur Schaumerzeugung nebst Harz Stoffe verwendet werden, die eine unlösliche Harzseife bilden. Zur Erzeugung der unlöslichen Harzseife wird das pulverförmige Harz in eine alkalische Lauge, z.B. Natronlauge, der Kasein zugesetzt wird, eingerührt und schließlich auch Kalkrahm eingetragen, bis die Schaumbildung vollzogen ist.

In der DE 967 902 B wird ein Verfahren zur Herstellung von Platten oder Körpern aus formbaren Kunstholzmassen beschrieben, bei dem Holzabfälle wie Sägemehl, zerkleinerte Hobelspäne oder dergl. mit Kreide und Gips und mit einem Bindemittel, das aus tierischen Eiweißprodukten wie Kasein, gelöschtem Kalk und künstlichen und/oder natürlichen Leimen besteht, vermengt werden.

In DE 196 05 701 A1 werden fließ-, streich- und spachtelfähige Kalkmassen sowie Verfahren zu deren Herstellung offenbart. Dabei dient gelöschter Kalk oder Sumpfkalk als Bindemittel, das mit natriumionenhaltigen Mitteln, wofür insbesondere NaOH eingesetzt wird, gegebenenfalls in Kombination mit Füllstoffen und/oder Zusatzstoffen wie etwa Tylose, d.h. Carboxymethylcellulose, dispergiert wird. Quark wird als so genanntes Härtungsmittel in der Einleitung erwähnt. Die Verwendung von Proteinen als Bindemittel oder ein Schäumen des Bindemittels werden hingegen nicht offenbart.

### Aufgabe und Beschreibung der Erfindung:

Vor diesem Hintergrund ist es Aufgabe der vorliegenden Erfindung, ein Verfahren und eine Zusammensetzung und daraus hergestellte Formmassen für die Herstellung, Behandlung, Beschichtung, Ausrüstung oder Veredelung eines Körpers anzugeben, bei der die bisherigen Werkstoffe durch ökologisch verwertbare Stoffe ersetzt werden.

Diese Aufgabe löst die vorliegende Erfindung in einem ersten Aspekt durch Bereitstellung eines Verfahrens zur Herstellung solcher Formmassen, umfassend den Schritt des Vermischens eines Bindemittels, bestehend aus:
einer Mischung aus Milch- und/oder pflanzlichem Protein sowie Kalk oder einem Kalkersatzmittel, ausgewählt aus der aus NaOH-Lösung, KOH-Lösung, Natriumhydrogencarbonat, Ammoniumhydrogencarbonat, Pottasche und Holzasche bestehenden Gruppe,
mit wenigstens einem Füllstoff, ausgewählt aus der Gruppe bestehend aus:
natürlich vorkommenden anorganischen Stoffen, Mineralien, geschlossenzelligen Trägern, offenzelligen oder porösen Produkten, Blähstoffen, Granulaten, Faser- und Faserverbundstoffen sowie expandierten Kunststoffen,
zu einer Formmasse, wobei das Bindemittel vor Zugabe des Füllstoffs aufgeschäumt wird.

Demgemäß stellt die vorliegende Erfindung in einem zweiten Aspekt eine Zusammensetzung für die Herstellung, Behandlung, Beschichtung, Ausrüstung oder Veredelung eines Körpers bereit, die Folgendes umfasst:
ein aufgeschäumtes Bindemittel, bestehend aus einer Mischung aus Milch- und/oder pflanzlichem Protein sowie Kalk oder einem Kalkersatzmittel, ausgewählt aus der aus NaOH-Lösung, KOH-Lösung, Natriumhydrogencarbonat, Ammoniumhydrogencarbonat, Pottasche und Holzasche bestehenden Gruppe, und
wenigstens einen, zum Vermischen mit dem aufgeschäumten Bindemittel bestimmten Füllstoff, ausgewählt aus der aus natürlich vorkommenden anorganischen Stoffen, Mineralien, geschlossenzelligen Trägern, offenzelligen oder porösen Produkten, Blähstoffen, Granulaten, Faser- und Faserverbundstoffen sowie expandierten Kunststoffen bestehenden Gruppe,
wobei der wenigstens eine Füllstoff gegebenenfalls in Pulverform vorliegt.

Somit wird gemäß vorliegender Erfindung durch Vermischen eines im Wesentlichen aus Protein und Kalk oder Kalkersatzmittel bestehenden, bereits vorgeschäumten Bindemittels mit wenigstens einem Füllstoff die gewünschte Formmasse hergestellt.

Die vorliegende Erfindung hat es sich zum Ziel gemacht, bislang bekannte Rohstoffe und Werkstoffe für die Herstellung von Formteilen durch eine ökologisch gleichwertige oder in einigen wesentlichen Eigenschaften sogar bessere Werkstoffe zu ersetzen. Je nach Anwendungsgebiet kann die Formmasse direkt zu Formteilen bzw. Werkstücken verarbeitet werden oder zur Herstellung, Behandlung, Beschichtung, Ausrüstung oder Veredelung eines Körpers oder einer Oberfläche eingesetzt werden.

Der Begriff "Formmasse", wie hier verwendet, soll keinesfalls nur eine viskose Masse umfassen, die, zu einer Form gepresst, ein Formteil (z.B. Platten) ergibt. Wie bereits erwähnt, lässt sich die Masse in jede beliebige Form und in verschiedenen Schichtstärken fertigen, aber auch auf bereits vorhandene Oberflächen auftragen, aufsprühen oder verputzen.

Die Erfindung ermöglicht, ein auf Naturstoffen basierendes branchenunabhängiges Material- und Produktkonzept zu erstellen und ein Gesamtkonzept zu verwirklichen, das von fossilen Rohstoffen abgekoppelt ist und ein auf Nachhaltigkeit ausgelegtes Produktkonzept darstellt.

Die erfindungsgemäßen Füllstoffe werden vorzugsweise aus folgenden fünf Gruppen a) bis e) ausgewählt:
a. natürlich vorkommende anorganische Stoffe, Mineralien, oder aufbereitete Blähstoffe und Granulate,
b. Natürliche, nachwachsende Materialien und Stoffe,
c. Faser- und Faserverbundstoffe,
d. expandierte oder geschäumte Kunststoffe,
e. Zellstoff bis Papier.

Ein wesentlicher Gesichtspunkt der vorliegenden Erfindung liegt beim Ersatz bekannter Werkstoffe und in der Verwendung von an sich bekannten und verfügbaren Naturprodukten. Beispielsweise kann die erfindungsgemäße Formmasse als Ersatzmittel für Holz oder Kunststoff verwendet werden, so dass Möbelstücke oder Verkleidungsteile hergestellt werden können. Je nach Art der Inhaltsstoffe der erfindungsgemäßen Zusammensetzung können die Eigenschaften von Holz wie Verschraubungsmöglichkeit, Sägen etc. vollständig nachgebildet werden. Zugleich kommen jedoch neue, positive Eigenschaften hinzu, wie zum Beispiel die Wärmeisolierung oder der Brandschutz. In der nachfolgenden Beschreibung wird eine Reihe von Anwendungsmöglichkeiten dargestellt, die jedoch lediglich beispielhaft aufzufassen sind.

Die erfindungsgemäße Zusammensetzung und die Kombination der darin enthaltenen Inhaltsstoffe ermöglicht die Herstellung von sowohl harten und festen Produkten und Oberflächen, als auch flexiblen und weichen Formstücke und Beschichtungen.

Überraschenderweise hat sich gezeigt, dass sich viele Produkteigenschaften derzeit verwendeter Werkstoffe durch eine neue und erfinderische Kombination von Naturstoffen, die erfindungsgemäß mit natürlichem Bindemittel aufgebaut sind, mit an sich bekannten Füllstoffen weitere neue und aufgewertete Komponenten erzeugen lassen. Die Produkteigenschaften (wie z.B. Versteifungsgrad, Bruchfestigkeit, Wärmeisolation, Brandsicherheit, Elastizität) sind im Wesentlichen von der Art und Menge der verwendeten Reaktionspartner, der Füllstoffe und gegebenenfalls zugegebenen Zuschlagsstoffen abhängig.

In einer bevorzugten Ausführungsform der Erfindung wird anstelle des Milchproteins oder daneben pflanzliches Protein zusammen mit Kalk oder/und einem Kalkersatzstoff zu einen reaktiven oder nicht reaktiven Bindemittel gewandelt. In einer Variante kann das Milchprotein in der Zusammensetzung auch vollständig durch pflanzliches Protein ersetzt werden.

In einer Verwendungsvariante ist mit der erfindungsgemäßen Formmasse eine Brandschutzbeschichtung einer Oberfläche eines Körpers möglich, so dass der so behandelte Gegenstand nahezu völlig feuerfest ist. Der mit der erfindungsgemäßen Zusammensetzung behandelte Körper weist eine geringere Entflammbarkeit auf als ein unbehandelter Körper. Auch die Beimischung der erfindungsgemäßen Zusammensetzung zu einer bestehenden Produktzusammensetzung kann die Entflammbarkeit verringern. Mögliche Anwendungsbereiche sind in der Papier-, Holz- und Textilherstellung und deren Verarbeitung zu sehen.

In einer weiteren Verwendungsvariante können rutschfeste Beschichtungen auf unterschiedlichen Materialien zur Transport-Ladungssicherung erstellt werden. Vorzugsweise werden Antirutschmatten für ein Kraftfahrzeug mit der erfindungsgemäßen Formmasse hergestellt. In einer bevorzugten Ausführungsform wird eine Ladungsunterlage oder Palette, beispielsweise aus Kartonage, Papier, Pappe, Kork oder XPS-Schaum mit der erfindungsgemäßen Zusammensetzung behandelt. Man erhält dadurch Reibwiderstände, die gegenüber den Sollwerten (0,6 µ) deutlich erhöht sind.

Daneben können komplette Baustoffgruppen für den Innen- und Außenanwendungen auf diese Weise hergestellt werden oder zur Veredelung/Aufwertung beitragen.

Durch Aufschäumen des Bindemittels und die Herstellung von geschäumten Produkten können Materialien mit zum Teil neuen Eigenschaften hergestellt werden.

Neue Möglichkeiten eröffnen sich ferner bei der Produktaufwertung und/oder Optimierung von Kunststoffen, bei denen vorgefertigte Proteinprodukte in den für Kunststoffe üblichen Mischungs- und Kompoundierprozessen beigemengt werden. Bei diesem System werden spezifische und vorteilhafte Proteineigenschaften bzw. Protein-Formmassen-Eigenschaften auf Kunststoffe übertragen.

### Bester Weg zur Ausführung der Erfindung:

### 4.1. Bindemittel

Die organische Komponente des Bindemittels ist vorzugsweise Milchprotein oder die Kombination aus Milchprotein und pflanzlichem Protein, das bevorzugt mit der Reaktionskomponente Kalk oder/und einem alkalischen Kalkersatzstoff zu einem reaktiven oder nicht reaktiven Bindemittel gewandelt wird.

Die hier beschriebenen erfindungsgemäßen Bindemittelsysteme sind vorzugsweise auf wässriger Basis ausgelegt und ergeben mit den gewünschten Proteinen und Reaktionspartnern eigenständige, qualitativ unterschiedliche Bindemittel.

Bei flexiblen und elastischen Bindemittelsystemen bilden natürliche Elastomere wie z.B. Naturkautschuk einen ergänzenden Rezepturbestandteil der erfindungsgemäßen Zusammensetzung.

### 4.1.1 Organische Reaktionskomponente, Proteine

Milchprotein oder Kasein (lateinisch: caseus = Käse) bezeichnet den Proteinanteil der Milch höherer Säugetiere, der nicht in die Molke gelangt und zu Käse weiterverarbeitet werden kann. Kasein ist ein komplexes Protein, das aus mehreren Polypeptid-Ketten (αS1, αS2, β, κ) besteht, die eine Quartärstruktur bilden. Es ist der Hauptbestandteil von Quark (Topfen) und Käse, welche durch Gerinnung des Kaseins ihre feste Konsistenz erhalten. Kasein wird schon seit langem nicht nur als Lebensmittel, sondern auch als Bindemittel verwendet, beispielsweise in Kaseinfarben oder als Leim (z. B. als Etikettierleim bei der Etikettierung).

In der vorliegenden Erfindung kommen vorzugsweise Stoffzusammensetzungen als organische Bindemittel zum Einsatz, die Milchprotein enthalten (Kasein-enthaltende Zusammensetzungen). Im Zuge einer einfachen und wirtschaftlichen Verarbeitung werden Ausgangsstoffe mit einem hohen Kasein-Gehalt bevorzugt. Beispiele hierfür sind Naturprodukte wie Milch, Magerkäse, Milchpulver, Quark etc. Jedoch ist auch reines Kasein im Sinne der vorliegenden Erfindung einsetzbar. Natives Kasein wird hauptsächlich durch Mikrofiltration gewonnen. Als Trennkriterium dient dabei die Partikelgröße. Denaturiertes bzw. funktionell verändertes Kasein lässt sich beispielsweise durch Säurefällung und anschließender Neutralisierung herstellen.

Das Milchprotein kann entweder isoliert oder gelöst in den zuvor genannten Milchprodukten unter Zugabe von Kalk oder eines Kalkersatzstoffes eingesetzt werden. Es ist darauf zu achten, dass der Fettanteil der Milch oder der Milchprodukte nicht höher als 10% ist, da sich die Mischungsverhältnisse zwischen Milchprotein/Kalk bzw. Kalkersatzstoff durch die zusätzliche Verseifung des Fettes und die gewünschten Eigenschaften des Bindemittels deutlich verändern. Insofern ist beispielsweise Frisch- oder Magerkäse als Milchprotein-Lieferant eher geeignet als fetthaltiger Hart- und Schmelzkäse.

Neben dem oder anstelle des Milchprotein(s) ist in einer bevorzugten Ausführungsform der Einsatz von pflanzlichem Protein vorgesehen. Pflanzenprotein bezeichnet die Gesamtheit der Proteine eines Pflanzenbestandteils, eine gesamte Pflanze oder eine Pflanzenfrucht oder Protein-Extrakte davon. In den Pflanzenbestandteilen und Pflanzenfrüchten sind mehr oder weniger hohe Protein-Konzentrationen enthalten, welche die bekannte positive Eigenschaft eines "Klebstoffes" oder Leims besitzen und als "Glute" (von lat. Gluten = Leim) bezeichnet werden. In einem Beispiel wurde Weizenmehl in der Zusammensetzung vermischt, das 10-12% Proteine, 59-72% Kohlehydrate in Form von Stärke und Schleimstoffen, ca. 14-15% Wasser und 2,4 - 7% Ballaststoffe enthält. Entsprechend den Zielsetzungen, die im Endprodukt angestrebt sind, kann der Hersteller aus einer Vielzahl vorhandener natürlicher proteinhaltiger Pflanzenfrüchte wählen.

Beispielhaft sind einige mögliche pflanzliche Ausgangssubstrate aufgeführt, die jeweils charakteristische Eigenschaften besitzen und in Kombination mit Carbonaten oder einer Alkalie in ein Bindemittelsystem überführt werden können (% = Proteinanteil):
Sojabohnen 37%
Linsen 23,5%
Erbsen 23%
Weiße Bohnen 19%

In Kombination mit Kalk oder Sumpfkalk oder einer Alkalie als Kalkersatzmittel verhalten sich die daraus erzeugten Bindemittel und Leimsysteme ähnlich und vergleichbar zu den Milchprotein-Systemen, jedoch mit dem Unterschied, dass die Benetzbarkeit verbessert und die Bindekraft erhöht ist. Bei Zugabe von Wasser bildet sich eine gummiartige, klebrige und elastische Masse, die für bestimmte Anwendungen vorteilhafter ist als die im Vergleich etwas spröderen und härteren Milchproteinsysteme. In Verbindung mit Carbonaten bildet sich, wie bei Milchproteinen, ein dauerhaft stabiler Komplex, der in Gegenwart von CO₂ zu einem feuchte- und nässebeständigen System vernetzt.

Für Beschichtungsmassen und Systeme ist der Zusatz von pflanzlichen Proteinen insofern vorteilhaft, weil die zu beschichtende Oberfläche besser benetzt wird und zu einer nahezu untrennbaren Verbindung zur Oberfläche führt. Speziell bei Papierbeschichtungen ergeben sich neue Aspekte, bei denen die erfindungsgemäßen Zusammensetzungen mit den Stärkekomponenten im Papier reagieren, chemisch verknüpft werden und somit untrennbare Verbindungen und neue vorteilhafte Eigenschaften entwickeln, insbesondere Feuchtigkeitsbeständigkeit, Hemmung der Entflammbarkeit, erhöhter Versteifungsgrad oder veränderte Elastizität.

Die Klebekraft und Benetzbarkeit von reinen pflanzlichen Protein-Bindemittelsystemen oder Milchprotein-Bindemittel in Kombination mit pflanzlichen Proteinbestandteilen ist sehr effektiv und kann auch auf eine Reihe bekannter Kunststoffe oder Kunststoffoberflächen übertragen werden. Die von dem Erfinder durchgeführten Beschichtungsversuche zeigen, dass mit dem erfindungsgemäßen System auf eine bislang aufwändige, kostenintensive Aufbereitung von Kunststoffoberflächen vor einer Verklebung oder Beschichtung (Einsatz von Primern, CoronaBehandlung, Anflämmen, Anschleifen etc.) verzichtet werden kann. Dies ist vermutlich darauf zurückzuführen, weil die Alkaliverbindungen und/oder Carbonate in der Zusammensetzung störende Weichmacher oder Trennmittel in den Kunststoffen chemisch umwandeln und dadurch zu einer deutlich verbesserten Benetzbarkeit und Haftung des Bindemittelsystems führen.

### 4.1.2 Anorganische Reaktionskomponente, Kalk und Kalkersatzstoffe

Vorzugsweise wird als Kalkkomponente in der Zusammensetzung Sumpfkalk oder Löschkalk eingesetzt. Löschkalk ist eine Alternative zu Sumpfkalk und stellt eine Optimierungsmöglichkeit für bestimmte Produkteigenschaften bzw. Materialmischungen dar. Im Vergleich zu Sumpfkalk hat diese Kalkform jedoch schwächere Bindekraft. Beide Kalkarten bewirken, dass diese in Kombination mit Proteinen (Milchprotein und/oder Pflanzenprotein) zu einem stark verklebenden Substrat umgewandelt werden, das hervorragende Bindeeigenschaften und Benetzbarkeit gegenüber den eingesetzten Füllstoffen besitzt. Durch den Carbonatanteil erhält das Produkt seine wasser- und feuchtebeständigen Eigenschaften.

Anstelle von Kalk kann auch ein alkalischer (basischer) Kalkersatzstoff wie zum Beispiel Natriumhydroxyd (NaOH) oder Kaliumhydroxyd (KOH) zur Proteinumwandlung in dem Bindemittel eingesetzt werden. Vorzugsweise wird eine wenigstens 1%-ige, bevorzugt 10%-ige NaOH- oder KOH-Lösung eingesetzt.

Weitere mögliche alkalisch wirkende Reaktionspartner für Protein-Bindemittelsysteme sind neben Kalk, NaOH und KOH wasserlösliche Carbonate wie Natriumhydrogencarbonat (Soda) und Ammoniumhydrogencarbonat (Hirschhornsalz) sowie natürliche basisch wirkende Stoffe wie Pottasche, Holzasche, die ein spezifisches Eigenschaftenprofil aufweisen und je nach Anwendungsbereich einsetzbar sind.

Das Mischungsverhältnis von Milchprotein oder pflanzlichem Protein zu Kalk/Kalkersatzstoff ist u.a. von der Ausgangskonzentration und Reinheit des Milchproteins sowie der Proteinkonzentration und Qualität der pflanzlichen Proteinprodukte abhängig.

Das Mischungsverhältnis zwischen Bindemittel und Kalk/Kalkersatzstoff beträgt vorzugsweise wenigstens 4:1. Reines Milchprotein (Kasein) benötigt beispielsweise ein Mischverhältnis von vorzugsweise 1:1 (Kasein:Kalk). Quark und Frischkäse werden vorzugsweise in einem Verhältnis von 5:1 mit Kalk eingesetzt. Magermilch oder Joghurt benötigt ein Mischverhältnis von 20:1 bis 20:2, da der Kaseinanteil aufgrund des hohen Wassergehaltes geringer ist. Milchpulver benötigt je nach Endprodukt vorzugsweise ein Mischungsverhältnis von 1:3 (Milchpulver:Kalk).

Pflanzliches Protein in Form von Mehl (z.B. 10-prozentige Lösung in Wasser) benötigt vorzugsweise ein Mischungsverhältnis zu Kalk/Kalkersatzstoff von wenigstens 10:1 und kann je nach gewünschter Eigenschaft des Endproduktes bis auf das Verhältnis 1:1 verschoben werden, wobei mit höherem Kalkanteil die Stärkebestandteile mitreagieren und zu härteren, zugleich aber auch stabileren und spröderen Endprodukten führen.

Die genauen Mischungsverhältnisse der einzelnen Komponenten sind jeweils von dem herzustellenden Produkt und dem Herstellprozess abhängig und können je nach Einzelfall und Anwendung variieren. Ferner spielt auch die Art und Konzentration des der Mischung gegebenenfalls zugegebenen Zuschlagstoffes bei der Wahl des Mischungsverhältnisses eine Rolle. Daher wird vorzugsweise die Menge an organischen Bindemitteln eingesetzt, die zur Erreichung der erwünschten Produkteigenschaften notwendig ist.

Durch den hohen alkalischen pH-Wert wirkt die Formmasse ferner antibakterizid und antifungizid. Verrottungsprozesse finden erst in kompostiernahen Situationen oder im Erdreich statt, wo es zu einer Wechselwirkung zwischen saurem Medium, Bodenbakterien, Dauerfeuchtigkeit und Bodenenzymen kommt. Diese Bedingungen leiten nach wenigen Wochen eine natürliche Verrottung ein und eröffnen damit einen natürlichen Produkt- und Materialkreislauf.

### 4.1.3 Bindemitteleigenschaften

Das erfindungsgemäße Milchprotein-Kalk-System hat den Vorteil, sehr "reaktiv" zu sein und sich selbständig und mit einer beschränkten "Topfzeit" (= Zeitraum, der benötigt wird, um das Bindemittelsystem zu verarbeiten) zu vernetzen.

Die pflanzlichen Protein/Kalk-Systeme verhalten sich sehr ähnlich, das System ist jedoch im Vergleich zu Milchprotein-Systemen nicht reaktiv und vernetzt erst in einem thermisch unterstützten Trocknungssystem. Dabei sind Temperaturen von mind. 70°C erforderlich. Die Vorteile ergeben sich durch die zeitlich frei gestaltbare Verarbeitungszeit und dem geringen Eigengeruch bei der Verarbeitung. Es ist jedoch zu beachten, dass der Stärkeanteil in der pflanzlichen Bindemittelmasse je nach Umgebungstemperatur und Kalkkonzentration nach einigen Tagen abgebaut und unbrauchbar wird und es dadurch zu einem Fäulnisgeruch kommen kann. Erst wenn das Bindemittel ausgehärtet und vernetzt ist, bleibt es dauerhaft stabil.

Die Produkteigenschaften des Bindemittels mit zugemengten alkalischen Basen ändert sich insofern, dass bei den alkalischen Kalkersatzstoffen anstelle einer milchig trüben Masse ein transparenter Kleberfilm geschaffen wird, der im Gegensatz zum Kalksystem nicht reaktiv ist und nur über (thermisch unterstützte) Trocknungsprozesse ausgehärtet wird.

Durch gezielte Steuerung des Wasserzusatzes oder mit leichter Vortrocknung der Formmasse kann die Aushärtezeit und die Formgebung der Formmasse gesteuert und variiert werden.

Bei Milchprotein/Kalk-Systemen ist - je nach Zusammensetzung - der Aushärteprozess durch Abtrocknung an der Luft bei Raumtemperatur nach einem kurzen Zeitraum abgeschlossen und kann, wenn erforderlich, bei einer Temperatur von etwa 60° bis 70°C weiter inkubiert werden. Dies hat den Vorteil, dass ganz leicht "milchig" oder "käsig" riechende Geruchsstoffe vorzeitig ausgetrieben werden.

### 4.1.4 Geschäumtes Bindemittel

Sowohl das Milchprotein/Kalk-Bindemittel als auch das pflanzliche Proteinbindemittel oder Bindemittelgemisch mit Milchprotein eignen sich hervorragend zur mechanischen Aufschäumung und können mit geeigneten Schaumstabilisatoren zu einer ultraleichten Formmasse aufbereitet werden. Zwei Systeme der Schaumstabilisierung bieten sich an:
- Die chemische Schaumstabilisierung, die mit Zusatz gelöster Gelatine, Algensubstrat oder anderer bekannten und alkalisch verträglichen Schaumstabilisatoren zu dauerhaft stabilen ultraleichten Formmasse führt, oder
- Die mechanische Schaumstabilisierung, bei der mit Zusatz von Kurzfasern oder mit den bereits genannten feinkörnigen Füllstoffen oder Mehlen eine leichte Formmasse geschaffen wird, die zu sehr leichten und Formstabilen Bauteilen führt.

Durch Zugabe von Soda oder einem anderen Substrat, das die Oberflächenspannung erhöht, kann die Schaumbildung im Schäumungsprozess weiter verbessert werden.

Beim Aufschäumen wird zunächst das organische Bindemittel angesetzt, d.h. es folgt eine Vermischung von Protein (Milchprotein und/oder Pflanzenprotein) und Kalk oder Kalkersatzstoff. Im weiteren Schritt kommt es zur Aufschäumung, wobei die Zusammensetzungen anschließend mit einem oder mehreren Stabilisator(en) ergänzt werden. Die Verarbeitung der geschäumten Formmassen unterscheidet sich gegenüber der "abgemischten Variante mit Füllstoffen" dadurch, dass der Bindemittel-Schaum dauerhaft stabilisiert wird, um eine gefestigte Schaumstruktur bis zum Ende des Trocknungsprozesses zu erhalten. Die Weiterverarbeitung sollte daher weitgehend drucklos erfolgen. Ein Verdichten der geschäumten Formmasse ist nicht (immer) zweckmäßig, da die Schaumstruktur zerstört werden würde.

Ein aufgeschäumtes Bindemittel aus Protein und Kalk oder Kalkersatzstoffen, das mit Füllstoffen zu kompakten Massen vermengt wird, hat die Eigenschaft, zu Beginn des Mischprozesses ein möglichst großes Bindemittelvolumen auszubilden, wodurch das Volumenverhältnis zwischen Füllstoff und Bindemittel verbessert wird. Insbesondere bei leichten, trockenen Füllstoffen kann es zu Dispergier-und Verteilungsproblemen kommen, die durch Anpassung der Volumenverhältnisse (Füllstoff zu Bindemittel) gelöst werden können, so dass selbst mit geringstem Bindemitteleinsatz qualitativ hochwertige und gleichmäßige Ergebnisse erreicht werden.

### 4.2. Füllstoffe

### 4.2.1 Füllstoffgruppen

### a.) anorganische Blähstoffe und Granulate

Bei Produkten mit hoher Feuerfestigkeit, geringem Eigengewicht, Formstabilität und Wirtschaftlichkeit werden vorzugsweise die Füllstoffe aus der Gruppe anorganischer Blähstoffe und Granulate ausgewählt. Diese können beispielhaft Blähglimmer (Vermiculit), Glasschaum, Blähglas, Blähton, Blähschiefer, Vulkanasche, Flugasche, Knochenasche, Knochenkohle, Bims, Gasbeton, Kieselgur, etc. sein.

### b.) anorganische Mineralstoffe

In der anorganischen Füllstoffgruppe führen natürliche Mineralien zu sehr festen und massigen Produkten. Solche Füllstoffe können beispielsweise Steinmehle, Sand und Schotter sein. Auch regranulierte Baustoffe (z.B. Ziegelsplitt, Betonbruch) eignen sich hervorragend für den Einsatz in dem erfindungsgemäßen organischen Bindemittelsystem.

### c.) Faserstoffe

Bei leichtgewichtigen und flexibleren Produkten mit hoher innerer Festigkeit bietet sich die Füllstoffgruppe der Faserstoffe an, wie z.B. regenerative und synthetische Fasern.

Bei natürlichen Faserstoffen sind beispielhaft Hanf, Jute, Leinen, Abaca, Sisal, Baumwolle, Kapok, Kopf- und Fellhaare, Kokos, Holz, Bambus, Gras/Heu, Stroh, Schilf, Brennnessel, Maisblätter, Bast, Seide, Zellulose genannt. Bei synthetisch hergestellte Fasern stehen Viskosefaser, Glas- und Mineralfasern, PET (Polyethylenterephthalat)-Fasern, PA (Polyamid)-Fasern, Polyacryl-Fasern, PP (Polypropylen)-Fasern in der bevorzugten Auswahl.

Sowohl natürliche als auch synthetische Fasermaterialien, zu denen auch Metallfasern, Metallwolle, Metallspäne gehören, eignen sich in hervorragender Weise als Zuschlagstoff, um bestimmte Stoffeigenschaften zu erreichen oder zu optimieren (z.B. Festigkeit im Verbund, Erhöhung der Bruchfestigkeit, Vermeidung von Rissbildung und Schrumpf- oder Trocknungsrissen, elektrische Leitfähigkeit oder elektrische Abschirmung, Magnetisierung, erhöhte Wärmeleitfähigkeit etc.)

### d.) Synthetische Schaumstoffe

Die synthetischen und natürlichen Schaumstoffe umfassen vorzugsweise Polystyrol-Schaum, PU (Polyurethan)-Schaum, Gummi-Schaumstoffe. In dieser Gruppe werden daneben neue Möglichkeiten zur Produktaufwertung und einem Recycling von Abfällen für die Neuverwertung entsorgter Materialien geschaffen.

Offenzellige synthetische Schaumstoffe können durch bekannte Ausrüstungs- und Veredelungsschritte wie Tauchen, Streichen, Sprühen mit Protein-Bindemitteln mit oder ohne Zuschlagstoffe in Ihren Eigenschaften aufgewertet werden. Dabei werden eine Reihe positiver Eigenschaften auf das ursprüngliche Schaumprodukt übertragen (z.B. Brandresistenz, Verhindern von Abtropfen im Brandfall, Steifigkeit, Geruchsminimierung, Emissionsreduzierung durch Kapselung der Oberflächen, Härte und Formstabilität etc.).

### e.) ergänzende Hilfsstoffe

Neben den aufgezeigten Füllstoffen und der Bindemittel-Kombinationsmöglichkeit gibt es weitere systemverträgliche Hilfsmittel, die bei Bedarf beigemengt werden. Dies sind vorzugsweise trockene Öle, Farbstoffe und/oder Pigmente oder Duftstoffe.

### 4.2.2 Füllstoff-Eigenschaften

Die Wahl der Füllstoffe und Füllstoffkombinationen hängt vom jeweiligen Anwendungsfall ab. Das Gleiche gilt auch für die Korngröße des Granulats oder der Faserlängen. Die Füllstoffe müssen gegebenenfalls vor deren Vermengung zerkleinert, pulverisiert oder granuliert werden. Auch eine Kombination verschiedener Füllstoffe, gegebenenfalls mit weiteren Zuschlagsstoffen oder verschiedenen Korngrößen, ist je nach Anwendungsfall denkbar und führt zu den gewünschten Produkteigenschaften.

Geschlossenzellige Träger und Füllstoffe weisen einen geringeren Bindemittelbedarf auf als offenzellige oder poröse Produkte. Der Bindemittelanteil und die Eigenschaft der Formmasse (z.B. Viskosität, Klebrigkeit, Benetzbarkeit etc.) kann über die Aufbereitung des Bindemittels zusätzlich optimiert und variiert werden, beispielsweise über den variablen Wassergehalt oder durch das Aufschäumen des Bindemittels.

Blähglimmer (Vermiculit) ist als Füllstoff besonders bevorzugt. Es handelt sich hierbei um einen extrem porösen, leichtgewichtigen und kostengünstigen Zuschlagsstoff, der heute Anwendung in der Baustoffindustrie als wärmeisolierender Zuschlagstoff Verwendung findet. Erfindungsgemäß wird Blähglimmer in Pulverform in verschiedenen Korngrößen eingesetzt. Bevorzugt sind Korngrößen zwischen 1 mm bis 8 mm bei einer Dichte zwischen 120 g/l und 800 g/l.

Weiter ist Glasschaum oder Blähglas als Füllstoff bevorzugt, der/das aus Recyclingglas hergestellt wird. Glasschaum weist eine hohe Eigenfestigkeit und Härte auf und hat hohe isolierende Eigenschaften bei einer Dichte zwischen 150 g/l bis 530 g/l. Glasschäume sind überwiegend geschlossenzellig und weisen vorteilhafterweise keinen Kapillareffekt auf, so dass kein Bindemittel in die Zellen absorbiert wird. Glasschaum, der mit Bindemitteln ausgehärtet ist, ist weitgehend unbedenklich, da das Bindemittel eine geschlossene "Schutzschicht" bildet, die einen weiteren Glasabrieb sowie Feinstaubbildung verhindert.

Blähton als Füllstoff kann sowohl in Kugelform als auch als Splitterstückchen eingesetzt werden. Die Dichte beträgt zwischen ca. 300 g/l bis 400 g/l. Für die erfindungsgemäße Formmasse ist dieser Füllstoff deshalb interessant, weil er eine neue Recyclingmöglichkeit für bereits genutzte Baustoffe darstellt.

Blähschiefer ist vom Ursprung und in seiner Bedeutung vergleichbar mit Blähglimmer. Die Materialeigenschaften unterscheiden sich jedoch deutlich. Blähschiefer weist eine hohe Festigkeit bei einer Dichte zwischen 600 g/l und 1800 g/l auf.

Vulkanasche hat eine feinporige Zellstruktur und ähnliche Eigenschaften wie geschäumtes Glas. Aufgrund der isolierenden Eigenschaften wird sie als kostengünstiges Trägermedium und Zuschlagstoff bevorzugt eingesetzt.

Flugasche gibt es in unterschiedlichsten Qualitäten und fällt als Verbrennungsrückstand bei Kohle oder in der Müllverbrennung an. Die Flugascheneigenschaften aus der Kohle- oder Koksverarbeitung eignen sich hervorragend als Füllstoff oder Zuschlagstoff für die erfindungsgemäße Formmasse. Die Dichte beträgt zwischen 800 g/l und 1100 g/l.

Knochenasche und Knochenkohle werden vorzugsweise aus der Verbrennung gewonnen. Beide Stoffe bringen für die Herstellung der erfindungsgemäßen Formteile vorteilhafte Eigenschaften mit.

Kork als Füllstoff weist ein geringes Gewicht, Beständigkeit, Isolierverhalten und eine geringe Brennbarkeit auf.

Kieselgur in natürlicher oder fraktionierter Form ist sowohl als alleiniger Füllstoff als auch als Zuschlagstoff geeignet und zeichnet sich im Endprodukt durch eine hohe Festigkeit, ein geringes Gewicht und eine glatte Oberfläche aus. Besonders vorteilhaft ist Kieselgur in Verbindung mit einem Milchproteinbindemittel zur Verwendung als Beschichtungs- oder Spachtelmasse.

Faserstoffe können kleinzellige Hohlräume bilden, die bei großen Flächen zu geringer Masse führen. Um für bestimmte Anwendungen Eigenschaften wie Festigkeit, Formstabilität oder Brandresistenz zu erreichen, werden die Faserstoffe mit bekannten, meist organischen Bindemitteln gebunden (z.B. Phenolharze, Acryldispersionen, Vinylacetate, Latex, PE, PP). Durch die Verwendung von Milchprotein und/oder pflanzlichem Protein in Verbindung mit Kalk/Kalkersatzstoff wird das Bindemittelsystem auf natürlicher Basis erreicht. Durch die besonderen Eigenschaften der natürlichen, erfindungsgemäß eingesetzten Bindemittel in Kombination der Füllstoffe werden die Herstellung und das Recycling wirtschaftlich und ökologisch vorteilhaft gestaltet.

Die nachträgliche Ausrüstung von bestehenden Faserstoffprodukten, wie Vliese oder Filze mit Proteinbindemittelsystemen, sind eine weitere erfindungsgemäße Einsatzmöglichkeit, um den Produkten neue und aufgewertete Funktionen zu geben (z.B. Brandverhalten, Geruchsminimierung, Steifigkeit und Festigkeit, Feuchtigkeitsstabilität, Reduktion oder Vermeidung eines Aufquellens der Fasern etc.).

Mit anorganischen Faserstoffen (z.B. Glas-, Mineral- und Metallfasern) werden stabile, feste und feuerresistente Produkte geschaffen. Mit natürlichen bzw. organischen Faserstoffen (z.B. Wolle, Hanf, Jute, Baumwolle, Leinen, Bambus, Zellstoff) bis hin zu der großen Palette synthetischer Fasern wie PET, PA, PP, PE, PAC sind formstabile, flammhemmende und emissionsfreie Produktgruppen machbar bzw. werden bestehende Problemstoffe in heute bestehenden Materialien optimiert oder gelöst.

Expandierte Kunststoffe können für die Herstellung der erfindungsgemäßen Formmasse als Füllstoff eingesetzt werden. Obwohl eine Reihe großtechnischer Recyclingmöglichkeiten für expandierte Kunststoffe wie EPP, EPS, PE, PUR, um die wichtigsten Vertreter dieser Gruppe zu nennen, bestehen, ist es ein neuartiger und vor allem erdölungebundener Ansatz, diese Produkte im Recyclingprozess mit Protein- oder Methylcellulose-Bindemitteln zu neuen Werkstoffen mit neuen Eigenschaften zu fertigen. Fast alle expandierten Kunststoffe haben thermische, Formstabilitäts- und Brandresistenz-Probleme, die mit Protein-Formmasse-Bindemitteln die Produkteigenschaften deutlich verbessern oder die bestehenden Probleme lösen und die Wiederverwertung auf ein qualitativ höheres Niveau setzen. Auch Mischungen aus verschiedenen expandierten Kunststoffen, die bis heute wegen ihrer unterschiedlichen Eigenschaften nicht möglich sind, können mit der erfindungsgemäßen Formmasse problemlos und in einfachen Produktionsverfahren dargestellt werden.

Viele Naturfasern haben erwünschte Eigenschaften, während bei einigen anderen industriell verwendeten Produkten unter klimatischer Belastung unerwünschte Effekte wie unangenehmer Geruch, Schimmelbefall usw. auftreten. Mit den erfindungsgemäßen Formmassen-Bindemittelsystemen (Milchprotein/Kalk und/oder pflanzliches Protein/Kalk oder eine Mischung aus beiden Proteinsystemen und deren alternativen Reaktionskomponenten zu Kalk) können die Fasern gegen diese unerwünschten Eigenschaften auf wirtschaftlich-ökologischer Basis ausgerüstet und "maskiert" werden.

### 4.2.3 Zuschlagstoffe

Beispielhafte Zuschlagstoffe sind Metallspäne zur Erzeugung elektrischer Leitfähigkeit, aber auch Kurzfasern, Pigmente, Lacke etc. Für elastische Endprodukte oder Beschichtungen werden bevorzugt Elastomere wie z.B. Naturlatex eingesetzt.

Kurze Faserstoffe (0,01mm bis 50mm Faserlänge) werden bevorzugt als Zuschlagstoff eingesetzt, wobei durch eine Vernetzung der Fasern zwischen den Füllstoffteilen die Eigenschaft der Materialmischung stabilisiert wird. Beispielsweise kann mit Kurzfasern aus Hanf (5 mm Faserlänge) die Bruchfestigkeit und Formstabilität signifikant verbessert werden, ohne dabei die anderen Materialeigenschaften (wie z.B. Gewicht, Emission, Ökologie) zu verändern.

### 4.3 Formteile

Das erfindungsgemäße Verfahren zur Herstellung eines Formteils umfasst die folgenden Schritte:
Vermischen eines bereits geschäumten organischen Bindemittels, bestehend aus einer Mischung aus Milchprotein oder pflanzlichem Protein oder einer Mischung aus beiden Proteinen und Kalk oder einem Kalkersatzstoff, mit einem Füllstoff, ausgewählt aus der Gruppe bestehend aus anorganischen Materialien, Blähstoffen und Granulaten, Faser- und Faserverbundstoffen, expandierten Kunststoffen, gegebenenfalls Vortrocknung der Formmasse zur Reduzierung des Flüssigkeitsgehaltes, Formgebung der Formmasse zu einem Formteil, oder Beschichtung/Ausrüstung einer Oberfläche.

Der vermischte Ansatz (Formmasse) wird mit an sich bekannten Methoden zu den jeweiligen Formteilen gespritzt, gepresst, gegossen oder einfach per Hand modelliert. Die Oberflächenausrüstung eines bestehenden Bauteiles mit der Formmasse erfolgt beispielsweise in Sprüh-, Streich-, Rakel-, Float- oder Spachteltechnik.

Die Formteile können im Zuge der Verarbeitung mit zusätzlichen Versteifungsmaterialien (Bewährungen) wie Metallgitter, Textilgewebe oder Vliese, Folien, Fasern und Garnen versehen und gemeinsam zu dem Formteil verpresst bzw. gegossen werden.

In den Formteilen können aufwertende Bestandteile bei der Verarbeitung der Formmasse mit berücksichtigt und im Herstellprozess des Bauteils eingebracht werden. Dazu gehören beispielsweise Leitungen, Rohre, Schächte, Drähte, Scharniere, Führungen, Winkel etc., nur um einige zu nennen, die gemeinsam mit der Formmasse in geeigneten Werkzeugen und Vorrichtungen zu dem gewünschten Formteil führen.

Ferner können die aus der Formmasse hergestellten Werkstücke mit der Zusammensetzung oberflächenbeschichtet oder veredelt werden. Als Beispiel sei die Lackierung oder Furnierung genannt. Im letzteren Fall lassen sich Spanplatten (z.B. für den Möbelbau) komplett durch die erfindungsgemäße Formmasse ersetzen. Die Formmasse kann nahezu gleich wie eine Spanplatte verarbeitet oder veredelt werden. Als wichtige Faktoren kommen jedoch die Brandbeständigkeit, Recyclingfunktion, Lösungsmittel- und Emissionsfreiheit hinzu. Selbstverständlich können beide Seiten der erfindungsgemäß hergestellten Formplatte beliebig beschichtet werden.

Die Vermischung von Kalk/Kalkersatzstoff und Protein erfolgt wie auch das Aufschäumen der Mischung vor Zugabe des Füllstoffes. Der Füllstoff wird beim Einsatz mit bekannten Verarbeitungstechnologien (z.B. Spritzen, Prägen, Pressen, Gießen) bevorzugt in Pulverform oder als Granulat eingesetzt, wobei die Korngrößen je nach Anwendungsfall variieren. Bevorzugt sind Korngrößen beim Granulat in einem Bereich von 0,001 bis 50 mm.

Je nach Art der verwendeten pulver- und granulatförmigen Füllstoffe und Zuschlagstoffe bzw. der Verdichtung im Verarbeitungsprozess variiert auch der Bindemittelanteil. Dieser steht in einem direkten Verhältnis zur Korngröße und der Oberflächenbeschaffenheit des Füllstoffes und gegebenenfalls deren Zuschlagstoffen. Je kleiner die Korngröße bzw. offenzelliger die Oberfläche ist, desto größer ist der Bindemittelanteil. Bei Korngrößen zwischen 5 und 10 mm beträgt der Anteil an Protein-Bindemitteln vorzugsweise zwischen 5 und 15 Gew.%, während bei Korngrößen von 1 mm und darunter bis zu 30 Gew.-% Protein-Bindemittel zum Einsatz kommen können.

### 4.4 Beschichtung / Streich- und Spachtelmassen

Ein eigenständiger Einsatzbereich besteht in der Verwendung der Formmasse als Streich- oder Spachtelmasse. Eine Möglichkeit, die Formmasse als Streich- und Spachtelmasse einzusetzen, besteht darin, die Konzentration des Füllstoffes entweder zu reduzieren und nach dem Mischprozess je nach Bedürfnis und Anforderung über gängige Verfahren zu einer Dispersion zu vermahlen (z.B. mit Perlmühlen, Walzenstuhl, Dissolver etc.). Die so entstehende Formmasse weist die Konsistenz einer viskosen Flüssigkeit bis zu einer kompakten Paste auf, die als Dünnschicht aufgetragen werden kann. Nach dem Aushärten und dem anschließenden Trocknungsprozess bildet sich ein geschlossener formstabiler Film an der Oberfläche des behandelten Formteiles, der alle beschriebenen Produktvorteile bietet und somit weitere Anwendungsmöglichkeiten zur Produktgestaltung und Aufwertung ermöglicht. Milchprotein-Rezepturen müssen unmittelbar nach der Herstellung verarbeitet werden.

Neben der Oberflächenaufwertung durch Beschichtungen können auch bestehende Materialien mit Proteinprodukten miteinander kombiniert und wenigstens teilweise im Herstellprozess in einem Arbeitsschritt vereinigt werden.

Wie auch bei den offenzelligen Schaumstoffen können textilen Gebilden (die ebenso eine offenzellige Struktur aufweisen) durch Ausrüstungs- und Veredelungsprozesse neue und aufgewertete Eigenschaften mit Proteinbindemittel und mit dünnflüssigen Streich- und Beschichtungsmassen übertragen werden. Sowohl an den Oberflächen als auch im textilen Gewirke können neue Eigenschaften konstruiert und verwirklicht werden. Beispielhaft seien Brandresistenz, Steifigkeit und Formstabilität, Akustik, Geruchsreduzierung und deren Vermeidung (bei Naturfasern oft ein Problem), Feuchtigkeitsresistenz etc. genannt.

Eine Verwendung der erfindungsgemäßen Formmasse oder Zusammensetzung eröffnet sich bei rutschhemmenden Produkten (z.B. Einlegematten). Es gibt viele Basisprodukte, die eine natürliche und biologische Ausgangsbasis haben (z.B. Papier und Pappe), jedoch mit moderner Chemie zu Problemstoffen mit relativ geringer Wirkung gewandelt werden (z.B. PU-Schaum/Pappe oder PU-Beschichtung auf Papier). Hinzu kommt heute noch das Problem, dass sich die Beschichtungsstoffe zum Teil und bei Extremlast kleinflächig ablösen können und kleine Rollen bilden, die eher einen entgegengesetzten Effekt statt der erwünschten Rutschhemmung haben und ein unkalkulierbares Risiko für das Ladegut in dieser Situation darstellen.

Mit der Proteinbeschichtung ist dieses Problem durch die untrennbare Verbindung zum Trägerstoff gesichert gelöst und hat den Vorteil, dass mit den Naturprodukten deutlich über Standardwerten liegende Reibwiderstände von 0,65 bis 0,95µ erreicht werden. Mit der erfindungsgemäßen Zusammensetzung wurden Prüfergebnisse von weit über 1,20µ erreicht. Mit beschichtetem Kork und drei kleinen Pads (300 x 150mm) wurden bei Papierrollen Messergebnisse von 0,91µ erreicht.

Einige der stabilen Trägerstoffe (z.B. Korkplatten) zeigen die Möglichkeit der mehrfachen Verwendung, da sich die Oberfläche trotz extremer Belastung kaum verändert hat.

### 4.4 Mehrschichtsysteme, Produktkombinationen

Beispielsweise kann ein 3D-Gewirke oder andere Materialien aufgebracht oder bei der Herstellung eines Bauteils mit dekorativer Oberfläche verpresst werden. Eine Variante eines erfindungsgemäß hergestellten Formteils betrifft Mehrschichtsysteme (z. B. mehrschichtige Körper), welche wenigstens zwei gleiche oder unterschiedliche Außenseiten aufweisen. Die Außenseiten können beispielsweise aus einer anorganischen Leichtstoffrezeptur bestehen, oder mit vorhandenen Komponenten wie Styropor, Metall, Holz etc und der Mittelschicht aus textilem Vlies oder Filz oder einen anderen Leichtstoff-Proteinprodukten kombiniert werden.

Eine weitere Ausführungsform betrifft daher ein Mehrschichtsystem, bei dem gleiche oder unterschiedliche Formmassen gegebenenfalls mit anderen Materialien aufeinander oder nebeneinander angeordnet werden. Dabei können weitere gezielte Eigenschaftsmerkmale in einem Bauteil vereint werden. Beispielhaft können akustische Eigenschaften, Wärmeisolierung, eine dekorative Sichtseite oder eine zusätzliche Funktion im Bauteil (z.B. Kabelkanal, Magnetleiste) oder festigkeitsfördernde Eigenschaften eingebracht werden. Vor diesem Hintergrund lassen sich auch Probleme hinsichtlich Verschraubfestigkeiten von Plattenprodukten lösen, indem spezielle Funktionsschichten mit der erfindungsgemäßen Zusammensetzung ausgebildet werden. Als besonders vorteilhaft haben sich dabei Vlies- und Filzstoffe aus natürlichen oder synthetischen Faserstoffen in den Kombinations- und Funktionsschichten erwiesen.

### 5. Technische Verfahren

Die Formgebung der Formmasse erfolgt vorzugsweise über an sich bekannte Verfahren wie Spritzgussverfahren, Formpressen, Prägen, Gießen, um nur einige zu nennen. Die mittels dieses Verfahrens hergestellten Formteile sind ebenfalls von der Erfindung umfasst. Vorzugsweise handelt es sich hierbei um ein Werkstück, das z.B. in einem Fahrzeug, als Baumaterial und Dämmstoff, als Verkleidungsteil für Gebäude Gebäudebestandteile, Maschinenverkleidung und -abdeckung, als Geräteisolierung, als Inneinrichtungsgegenstände oder als Formrohr und Schachtbauteil bzw. -Füllung eingesetzt wird. Aufgrund dieser Eigenschaften eignet sich die erfindungsgemäße Formmasse zur Herstellung, Beschichtung oder Behandlung eines Körpers oder einer Oberfläche. Beispielsweise können die mit der Formmasse behandelten Körper nach der Behandlung eine hohe Körper-, Hitze-, Feuchtigkeits-, Alterungs- und/oder Brandbeständigkeit aufweisen oder rutschfest ausgerüstet werden.

Die erfindungsgemäße Formmasse eignet sich zur Herstellung oder Verkleidung von Formrohren, Schächten, Rohr- und Schachtverkleidungen und Rohr- und Schachtfüllungen.

### 6. Rezepturbeispiele

### 6.1 Plattenprodukte mit unterschiedlicher Verdichtung

Die folgende Tabelle 1 gibt Aufschluss über bevorzugte Mengenverhältnisse zwischen Bindemittel und Füllstoff. Angegeben ist die Trockensubstanz des Bindemittels in % bei verschiedenen Korngrößen des Füllstoffs Blähglimmer.

**Tabelle 1**

| Korngröße | Verdichtung | Bindemittel |
|---|---|---|
| bis 1 mm | gering | >/= 30 Gew.-% Milchprotein |
| | mäßig | >/= 25 Gew.-% Milchprotein |
| | hoch | >/= 20 Gew.-% Milchprotein |
| 2 - 3 mm | gering | >/= 25 Gew.-% Milchprotein |
| | mäßig | >/= 23 Gew.-% Milchprotein |
| | hoch | >/= 20 Gew.-% Milchprotein |
| 3 - 5 mm | gering | >/= 20 Gew.-% Milchprotein |
| | mäßig | >/= 18 Gew.-% Milchprotein |
| | hoch | >/= 15 Gew.-% Milchprotein |
| 5 - 10 mm | gering | >/= 15 Gew.-% Milchprotein |
| | mäßig | >/= 13 Gew.-% Milchprotein |
| | hoch | >/= 10 Gew.-% Milchprotein |

Eine weitere Bindemittelabhängigkeit und Optimierungsmöglichkeit ergibt sich mit zunehmender Stärke bzw. zunehmendem Volumen des Bauteils. Je größer das Bauteil und/oder stärker verdichtet, desto geringer das Verhältnis von Bindemittel zu Füllstoff. Beispiel: (Blähglimmer-Platte, Körnung 5mm, mittelstarke Verdichtung)
5mm Plattendicke = 18-20% Milchprotein
10mm Plattendicke = 13-15% Milchprotein
20mm Plattendicke = 8-10% Milchprotein

Die nachfolgenden Beispiele sollen die Erfindung näher erläutern und bevorzugte Ausführungsformen angeben:

### 6.2 Rezepturbeispiele in der praktischen Anwendung:

### Verfahrensweise zur Herstellung und Verarbeitung einer Formmasse ohne Schäumunq (nicht erfindungsgemäß)

### Rezepturbeispiel Kasein/Kalk - Blähglimmer - System

**1000 ml-Ansatz:**

| | |
|---|---|
| Kasein-* | 30 g (+100 g Wasser für die Kasein-Aufschließung) |
| Sumpfkalk | 30 g |
| Vermiculit (Körnung 2 mm) | 120,0g |

| | |
|---|---|
| *) Kaseinpulver mind. 2 Stunden vor der Verarbeitung mit Wasser im Verhältnis 1 Teil Kasein und 3,5 Teile Wasser vorquellen) | |

Die angequollene Kaseinmasse wird mit Sumpfkalk vermischt und so lange kräftig verrieben, bis beide Bestandteile komplett homogenisiert sind und sich eine leicht gelblich gefärbte und eine leicht viskose Masse bildet (nach ca. 1 Minute). Anschließend wird Blähglimmer (Vermiculit) zugemischt und so lange eingerührt, bis sich die Bindemittelmasse gleichmäßig im Ansatz verteilt (ca. 1 Minute). Die Formmasse kann durch Wasserzugabe auf die gewünschte Konsistenz eingestellt werden.

Innerhalb von 10 Minuten muss dieser Vorgang abgeschlossen sein, da das Bindemittel nach dieser Zeit die Reaktion startet und geliert. Wenn dieser Zeitraum zur Verarbeitung der Formmasse zu kurz ist und verlängert werden muss, kann nach der Herstellung des Kasein/Kalk-Gemisches und vor der Zugabe des Füllstoffes Vermiculit eine zusätzliche Menge Wasser (ca. 5 bis 10 g) zugesetzt werden, um die Reaktionszeit des Bindemittels zu verlängern.

Die Formmasse hat jetzt eine klebrige, kompakte Form und ist zügig zu verarbeiten, da der Trocknungs- und somit Aushärtungsprozess in der Umgebungsluft unverzüglich startet. Die Topfzeit beträgt etwa 10 bis 15 Minuten bei Raumtemperatur.

Die hohe Klebekraft des Bindemittels kann dafür genutzt werden, eine dekorative Bauteiloberfläche bzw. ein kostengünstiges "Oberflächenmaterial" mit zu pressen. Wenn das nicht erforderlich oder gewünscht ist, dann muss das formgebende Werkzeug entweder antihaftbeschichtet sein, oder es muss ein Antihaft-Trennmittel eingebracht werden.

Die Formmasse wird in die Formmatrize eingebracht und um wenigstens 10% (bezogen auf das Ausgangsvolumen) gepresst bzw. verdichtet. Je höher der Verdichtungsgrad, desto stabiler und kompakter ist das Endprodukt. Bei niedrigem Pressgrad ist es vorteilhaft, das Bauteil für wenigstens zwei Stunden reagieren und vorhärten zu lassen, danach zu entnehmen und an der Luft abzutrocknen. Stark verpresste Bauteile (Verdichtung bis ca. 50%) können unmittelbar nach dem Pressvorgang entnommen und unter Normalklima für mindestens eine Stunde ausgehärtet/getrocknet werden. Erst nach diesem Vorgang kann und soll die Resttrocknung erfolgen (bei Raumtemperatur oder unter Wärmezufuhr, eine Temperatur von maximal 80°C). Erst wenn das Bindemittel ausgehärtet und komplett abgetrocknet ist, ist das Formteil extrem wärme- und hitzebeständig.

Das fertige Bauteil hat je nach Verdichtungsgrad eine Materialdichte zwischen 0,05 kg/dm³ bis 2,5 kg/dm³

### Beispiel 1: Basis-Rezepturbeispiel für ein flexibles Bindemittelsystem, oder eine rutschfeste Beschichtungsmasse (bedingt feuchte und Wasserbeständig, klebrige Einstellung)

| | |
|---|---|
| Magermilch (1% Fettanteil) | 500g |
| Weizenmehl glatt W450 | 50g |
| NaOH 10%ig | 50g |
| Naturlatex (TS ca. 50%) | 400g |

Diese Grundzusammensetzung eignet sich als Beschichtungsmasse für rutschfeste Oberflächen und ist in Ihrer Wirkung so eingestellt, dass die Oberfläche leicht klebrig bleibt.

Diese Zusammensetzung kann zugleich als "flexibles" Bindemittel für andere Anwendungen und Produkte eingesetzt werden. Die gewünschten Eigenschaften können durch Variieren der Komponenten oder/und durch weiteren Zusatz von Carbonatlösungen eingestellt werden. IIa.) Rezepturbeispiel für flexible und zugleich rutschfeste Korkplatten

| | |
|---|---|
| Kork, granuliert, Korngröße 2-3mm | 900g |
| Bindemittel gemäß Grundrezeptur II | 100g |

In der Grundzusammensetzung des flexiblen Bindemittelsystems kann man wählen, ob die Vernetzung erst im Trocknungsprozess unter Temperatur erfolgt (a.), oder ob man ein fertiges, bereits vorvernetztes System erstellen möchte (b.).

Bei Variante a.) wird eine Vernetzung und Härtung im Trocknungsprozess vorgenommen, wofür die Komponenten zunächst unter Vermeidung einer Klumpen- oder Koagulatbildung vermischt werden. Der Ansatz kann unmittelbar nach dem Vermischen eingesetzt und weiter verarbeitet werden. Die Aushärtungs- und Trocknungstemperatur sollte durchgängig mehr als 80°C betragen.

Bei Variante b.) wird Magermilch, Mehl und NaOH-Lösung kurz aufgekocht, bis die bis dahin trübe Lösung transluzent wird und sich in der Masse vorhandene Schaumbläschen vollständig gelöst haben. Nach dem Abkühlen wird der gewünschte Latexanteil beigemengt und gründlich dispergiert, bis eine einheitliche, gleichmäßig verteilte und cremige Masse gebildet hat. Die Beschichtungsmasse ist fertig und kann mit an sich bekannten Hilfsmitteln und Maßnahmen auf einer beliebigen Oberfläche aufgetragen werden oder als flexibles Bindemittelsystem Verwendung finden.

Um eine feuchte- und wasserbeständige Rezeptur bzw. Beschichtungs- und Bindemittelmasse zu verbessern oder zu erreichen, kann der Rezeptur Carbonat, möglichst in Lösung, zugesetzt werden (vorzugsweise 1,0 bis 25 Gew.-% Carbonat). Je nach erwünschter Eigenschaft wird bevorzugt Natriumcarbonat, Kaliumcarbonat oder Calciumcarbonat als Lösung zugesetzt. Es empfiehlt sich, mit Carbonatlösungen zu arbeiten, da der Reaktionsprozess mit den anderen Komponenten sehr rasch erfolgt und leicht zu Klumpenbildung im Ansatz neigt.

Neben den gelösten Carbonaten kann die Wasserbeständigkeit dieser Rezeptur alternativ mit Sumpfkalk erreicht werden, bei dem erst im Reaktionsprozess und der Vernetzung die Carbonatbildung einsetzt. Das hat in manchen Anwendungen Bedeutung und kann gezielt genutzt werden.

Bemerkenswert ist, dass dieses elastische Bindemittel im Vergleich zu allen anderen vorhin genannten Protein-Bindemitteln und Rezepturen durch die Naturlatex-Komponente keine unbrennbaren Eigenschaften aufweist, aber nach dem Aushärten den typischen Latexgeruch verliert und biologisch abbaubar bleibt. Man beobachtet keine Vulkanisation und dauerhafte Vernetzung wie bei Gummiprodukten mit Schwefelverbindungen.

### Beispiel 2: Rezepturbeispiel Milchprotein/Kalk- Styropor-Recyclingsystem (gefärbte Variante)

| | | |
|---|---|---|
| Magerquark/ Magertopfen | 80 | 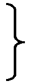 |
| Sumpfkalk | 15 g | |
| Styroporgranulat (2 mm) | 50 g | |
| Farbpigment (z.B. Eisenoxyd) | 0,1 g | |

Der erste Schritt verläuft wie im ersten Beispiel beschrieben, d.h. es folgt die Vermischung und Verreibung von Quark, Sumpfkalk und Pigment.

Die Bindemittelrezeptur wird dabei ohne Schaumstabilisator aufgeschäumt, um ein großes Volumen zu bilden und eine gleichmäßige Verteilung des Klebers/Füllstoffs sicherzustellen. Im Zuge des Aushärteprozesses zerfällt der Schaum und bildet einen gleichmäßig verteilten Film und es kommt zu einer vollständigen Verkapselung der Styroporteile.

Optional und um die Eigenstabilität des Endprodukts weiter zu optimieren, können 20g Knochenasche oder 30-50g anorganisches Pulver (z.B. Steinmehl) dem Ansatz beigemengt werden.

Das Styroporgranulat wird gleichmäßig eingemischt und innerhalb von 10 bis 30 Minuten in die Form gebracht und ausgepresst. Die Systematik, die Rahmenbedingungen und die Vorgehensweise sind identisch dem ersten Beispiel, nur dass bei elastischen Füllstoffen zu beachten ist, dass bei unzureichender Verfestigung und Aushärtung des Bindemittels die Formmasse nachträglich nochmals expandiert. Nach etwa 10 Minuten Verfestigung und 2 Stunden Trocknung an der erwärmten Luft (50 bis 70°C) ist das Formteil dauerhaft stabil und in seinen Eigenschaften aufgewertet.

Alternativ kann unter Raumtemperatur, nur entsprechend länger (ca. 24-30 Stunden), abgetrocknet und ausgehärtet werden. Das Endprodukt wird über die Zeit zunehmend fester und stabiler, da das Bindemittelsystem mit CO₂ der Luft vollständig vernetzt und aushärtet. Das Styropor-Endprodukt ist gegenüber thermischen Einflüssen deutlich wärmestabiler, ist selbstverlöschend bei Brandeinwirkung und tropft in der Flamme nicht mehr ab. Die Temperaturwechselwirkungen (Schrumpf oder Ausdehnung bei Temperaturwechsel) werden durch dieses Bindemittelsystem erheblich reduziert.

### 6.3 Anwendungsbeispiele von Formteilen bzw. Beschichtungen (Rutschfestbeschichtung), die mit der erfindungsgemäßen Formmasse hergestellt worden sind.

Die folgenden Beispiele stellen nur eine kleine Auswahl möglicher Anwendungsformen dar. Sie dienen lediglich der Veranschaulichung der Erfindung. Keinesfalls soll die Erfindung auf diese Beispiele beschränkt ausgelegt werden.

### Möbelplatten

Eine aus den Rezepturbestandteilen I gefertigte Formmasse wird in ein formgebendes Werkzeug gefüllt und ausgepresst. Das Volumen der Formmasse reduziert sich dadurch um 30 bis 50%.

Eine mit Rezepturbestandteilen II gefertigte Formmasse wird in das formgebende Gießwerkzeug eingebracht und entweder formgebend ausgepresst und danach getrocknet, oder in der erwärmten Form ausgepresst und ausgehärtet. Dabei ist zu beachten, dass durch die Klebrigkeit des Ansatzes entweder die Form antihaftbeschichtet ist oder eine frei wählbare Oberfläche des künftigen Endprodukts mit ausgepresst wird. Auch die Möglichkeit der Vorverfestigung und Ersttrocknung im Werkzeug und Nachhärtung und Trocknung des Bauteils im zweiten Arbeitsschritt kann bei bestimmten Füllstoff-Rezepturen vorteilhaft sein.

Diese Zusammensetzung ist nicht temperaturempfindlich und kann im Trocknungs- und Reaktionsprozess in einem Bereich bis 120°C eingestellt werden.

Eine mit Rezepturbestandteilen III gefertigte Formmasse wird in das formgebende Werkzeug eingebracht und in die gewünschte Form und Verdichtung ausgepresst. Bei vorgetrockneten Formmassen wird nach wenigen Minuten Presszeit das gefertigte Bauteil entnommen und entweder an der Luft oder im gewärmten Luftstrom bei maximal 80°C ausgehärtet und getrocknet.

Bei nicht vorgetrockneten Formmassen ist es entscheidend, wie hoch die Verdichtung des Styropors vorgesehen ist. Bei starker Verdichtung und somit hoher Rückstellkraft des Styropors werden fixierbare Werkzeuge eingesetzt, die nach dem Füllen und Pressen den gespannten Zustand für mind. eine Stunde halten. Die Haltezeit kann mit leichter Temperierung der Werkzeuge (max. 60°C) die Bindemittelreaktion beschleunigen und die Haltezeiten im Werkzeug verkürzen. Nach dem Formguss wird das vorgefestigte Bauteil entnommen und wie im erstgenannten Ablauf getrocknet und ausgehärtet.

Bei Füllstoffen, die aufgrund Ihrer Eigenschaft keine saugenden Oberflächen besitzen oder wasserabweisende Eigenschaften haben (z.B. Styropor), wird die Formmasse vor dem formgebenden Prozess bevorzugt "trocken" gehalten. Dies geschieht entweder durch Vortrocknung der Formmasse oder durch Zugabe von Zuschlagstoffen, die die rasche Verfestigung und Stabilisierung des gefertigten Formteils unterstützen.

Das daraus gefertigte Formteil in Plattenform wird im Anschluss mit bekannten Oberflächen wie Furnieren, dekorativen Folien, Papieren oder Lackschichten veredelt. Die Verarbeitung ist mit branchenüblichen Methoden, Einrichtungen und Hilfsmitteln möglich.

### Oberflächenoptimierung / Oberflächenschutz / Oberflächenausrüstung

Die Bindemittelsysteme werden als aufwertende Oberflächenausrüstung für bestehende oder mit Modelliermasse gefertigte Bauteile eingesetzt. Als dünner Film aufgetragen, aufgesprüht oder aufgespachtelt entsteht eine überwiegend nicht brennbare, feuchte und alterungsbeständige, formstabilisierende, wischfeste und für bestimmte Anwendungen eine rutschfeste oder klebrige Oberfläche.

Mit Füllstoffen versetzt oder gemahlen, entsteht je nach Füllstofftyp und Menge eine lackähnliche bis pastöse Spachtelmasse, die als Oberflächenveredelung eingesetzt wird. Dabei kann eine dekorative Oberflächengestaltung mit berücksichtigt sein. Die bereits genannten Produkteigenschaften der Formmasse werden somit als "Dünnschicht" auf bestehende Werkstoffe und Bauteile übertragen. Ein oft gewünschter und zusätzlich positiver Effekt ist, dass die Eigensteifigkeit / Formstabilität durch die Beschichtung verstärkt wird. Einige Rezepturen bilden aufgrund Ihrer Beschichtungsoberfläche eine hervorragende Deckschicht für glatte Oberflächenveredelungen (z.B. Lackierung).

Ein bereits praxiserprobtes und geprüftes Veredelungsverfahren wird mit einer rutschfesten Beschichtung erreicht, die in Anlehnung an das Rezepturbeispiel II erstellt wurde.

Mit diesem Beschichtungssystem wurden rutschfeste Unterlagen für die Ladungssicherung von Transportgütern erstellt, die mit Papier, Pappe und XPS-Schaumstoff neue und extrem wirksame Wirkung zeigen. Das Auftragsgewicht wurde dabei im Bereich zwischen 5g/m² bis 100g/m² ausgetestet und steht in Abhängigkeit zum Trägerwerkstoff und seiner Oberflächeneigenschaft (saugend, rau, strukturiert etc).

### Füllungen

Durch die freie Formgebung der Formmasse und die außergewöhnlichen Eigenschaften als versteifendes und gleichzeitig isolierendes Füllmaterial ist der Einsatz für Formrohre (z.B. Wasserrohre) und Schacht-Bauteile optimal. Bestehende Formrohre wurden mit der Formmasse gefüllt, um daraus eine wärme-/schallisolierte und zugleich formstabile Rohrleitung bzw. einen Rahmen für Fenster und Türen zu fertigen. Neben den genannten Eigenschaftsvorteilen dieser neuen stabilen Konstruktion ergeben sich auch Optimierungspotentiale beim Einsatz der bestehenden Profile. Die Wandstärken und Versteifungsrippen werden damit deutlich minimiert und vereinfacht.

### 7.) Weitere Anwendungsbeispiele und Einsatzmöglichkeiten

Die nachfolgenden beispielhaften Anwendungsmöglichkeiten für die erfindungsgemäße Formmasse bzw. die daraus hergestellten Formteile sollen die Verwendungen näher erläutern:

### Automobil-Innenausstattungsbauteile:

In der Automobilindustrie sind konturgebende, formschlüssige, leichtgewichtige, stabile Bauteile gefordert, die eine Reihe von Vorgaben erfüllen müssen. Dazu gehören u.a. Emissions- und Geruchsfreiheit, akustische Wirksamkeit, Crashsicherheit, Brandverhalten, Demontierbarkeit, Recyclingmöglichkeit, zum Teil Airbagtauglichkeit, Klimawechselbeständigkeit, Wärmeisolierung bzw. Hitzeschutz. Da diese Vorgaben in Verbundstoffen bislang mit bis zu 10 Einzellagen sowie in komplexen Fertigungsprozessen realisiert werden und die Entsorgung bzw. fehlende Recyclingkonzepte ein immer noch ungelöstes Problem sind, bieten sich hier vielfältigste Optimierungs- und Problemlösungsmöglichkeiten mit der erfindungsgemäßen Formmasse an.

### Flugzeugindustrie:

Die Luftfahrtindustrie ist eine der anspruchvollsten Branchen mit höchsten Qualitäts- und Sicherheitsansprüchen. Speziell Leichtbau, Brandsicherheit und Isolierung stehen an vorderster Stelle. Diese Eigenschaften werden heute mit komplizierten Materialpaarungen und zum Teil sehr bedenklichen Werkstoffen (z.B. phenolharzgebundene Schichtstoffe) erreicht. Rohrleitungen werden beispielsweise mit Polyamidschäumen ausgerüstet und könnten deutlich effizienter, wirksamer und wirtschaftlicher mit der Erfindung substituiert bzw. optimiert werden. Die Innenverkleidungsteile eines Flugzeugs, aber auch die akustischen und wärmedämmenden Bauteile bieten weitere Einsatzmöglichkeiten und einen einheitlichen Materialaufbau unter Beibehaltung bestehender Vorgaben und Ansprüche. Die bis heute nicht bestehende Recyclingmöglichkeit der bestehenden Flugzeug-Innenausstattungsteile ist ergänzend als weiteres und nicht unbedeutendes Potential für die Zukunft erwähnt.

### Interior für Schienenfahrzeuge:

Es werden wie bei Automobil und Flugzeug Werkstoffe und Kombinationen eingesetzt, die aus Gründen der Sicherheit und des Komforts sehr komplex aufgebaut sind (z.B. HPL-Hochdruckschichtstoffe, Mellaminharzsysteme u.v.a.m.). Mit der Erfindung bietet sich eine einfache und unkomplizierte Lösungsmöglichkeit vieler bekannter offener Probleme bei Verwendung der erfindungsgemäßen Formmasse und der daraus hergestellten Formteile. Mit entsprechender Oberflächengestaltung und mit Zugabe von Faserstoffen ist auch der Schutz vor Vandalismus und höchstmögliche Bruchfestigkeit, was bekanntlich ein Thema in öffentlichen Verkehrsmitteln ist, sichergestellt.

### Reisebusse:

Reisebusse haben auch ein Gewichts-Verteilungsproblem, wobei es das Ziel ist, den Schwerpunkt des Fahrzeugs möglichst tief zu halten und die Bauteile in den Passagierzonen möglichst leicht zu gestalten. Ein breites Feld an Anwendungsmöglichkeiten und Optimierungen bietet sich mit der erfindungsgemäßen Formmasse an.

### Campingfahrzeuge, Wohnmobile, Boote, Schiffskabinen:

In dieser Gruppe vereinen sich viele der Anforderungen, welche schon anfangs zusammengefasst worden sind (z.B. Leichtbau, brandfest, witterungs- und alterungsbeständig, wärmeisolierend, akustisch wirksam usw.). Da mit steigendem Komfortanspruch der Urlauber die Campingfahrzeuge und Boote immer größere Dimensionen einnehmen, wurden zwischenzeitlich die gesetzlich erlaubten Gewichtsgrenzen für den Transport mit Pkw-Führerschein erreicht. Da sowohl die Außenhüllen-Bauteile als auch das Interior aus der Formmasse darstellbar sind, bieten sich Problemlösungsmöglichkeiten und Optimierungspotentiale. Das trifft auch für die moderne Schifffahrt und im Bootsbau zu, bei denen das Thema Brandschutz, isolierende und akustische Eigenschaften sowie geringes Gewicht übergeordnete Bedeutung hat. Auch für diesen Anwendungsbereich bringt die erfindungsgemäße Formmasse ihr Potential ein.

### Garagentore / Industrietore:

Diese werden bislang aus synthetisch aufgeschäumten Blech- und Kunststoffteilen gefertigt, um an der großen Fläche ausreichende Steifigkeit, geringes Gewicht und Wärme-/ Schallschutz zu gewährleisten. Diese Aufgabenstellung kann mit der Erfindung zu weiteren zusätzlichen Vorteilen in der Herstellung der Torsegmente ausgebaut und in vereinheitlichten Werkstoffen und einfachen Fertigungsprozessen optimiert werden.

### Fenster- und Türrahmen:

Kunststofffenster haben sich als Stand der Technik durchgesetzt und werden wegen ihrer langjährigen Passgenauigkeit und Formstabilität geschätzt. Aluminium ist in den Hintergrund getreten, weil Kältebrücken zu Kondenswasser und entsprechenden Problemstellungen geführt haben. Holz hat zwar immer noch Vorteile gegenüber Kunststoff und Aluminium, ist aber aufwändiger in der Pflege und langfristig nicht formstabil. Alu- und Kunststofffenster mit der Formmasse gefüllt können den Aufwand der Fenster-Profilherstellung und die Gestaltung deutlich reduzieren, die Stabilität (Versteifung) merklich verbessern und die Wärmeisolation auf ein höheres Niveau setzen. Die Gesamteigenschaften dieser gefüllten Rahmenelemente werden aufgewertet (Brandverhalten, Akustik, Gewicht, Isolation usw.).

### Verkleidungsstelle in öffentlichen und nicht öffentlichen Gebäuden:

Brände in U-Bahnhöfen, Hotels, Lokalen, Schulen, Wohnungen oder anderen Gebäuden sind nach wie vor ein Thema, obgleich es feuerfeste Materialien und Beschichtungen gibt. Die Erfindung schafft auch in diesem Bereich eine Lösung: Die in jeder Form dekorierbaren Verkleidungsteile aus der beschriebenen Formmasse haben keine selbst entzündende Wirkung und reduzieren die selbständige Ausbreitung von Bränden (Brandabschnitt). Verbesserungen im Gebäude- und Personenschutz sind die Folge. Aufgrund der hohen isolierenden Wirkung und der akustisch positiven Eigenschaften werden auch starke Klimaschwankungen und Geräuschentwicklungen gedämpft. Zusätzliche Verkleidungsteile und Dämmstoffe können stark reduziert werden und je nach örtlicher Gegebenheit auch ganz entfallen.

### Ladungssicherungsprodukte/ rutschhemmende Ausrüstungen:

Rutschhemmende Unterlagen zur Sicherung des Ladeguts ist eine höchst effiziente und sinnvolle Form einer erfindungsgemäßen Verwendung der Formmasse, bei der kostengünstige und umweltfreundliche Produkte wie Papier, Pappe, Holz, Fasermatten etc. mit einer sehr wirkungsvollen rutschfesten erfindungsgemäßen Zusammensetzung ausgerüstet. Den weiteren Anwendungen, wie rutschfeste Verpackungsmaterialien oder rutschfeste Flächen für Schränke und Regale, Tablets, Ladenböden bis hin zu Flaschen und Gebinden sind keine Grenzen gesetzt, da die Beschichtungsmasse sowohl bei der Erzeugung des jeweiligen Produkts ausgerüstet oder zu späterem Zeitpunkt an jedem Ort auch nachträglich und mit einfachen Mitteln wie Pinsel oder Spachtel aufgebracht werden kann.

Die Erfindung stellt eine ökologisch und wirtschaftlich vernünftige Lösung zur Verfügung, bei der bekannte Bindemittel durch natürliche organische Bindemittel substituiert werden können. Dadurch wird ein natürlicher Recycling-Kreislauf in Gang gesetzt. Die erfindungsgemäß verwendeten Materialien können wiederverwertet werden. Mit der erfindungsgemäßen Formmasse kann eine Reihe von Produkten oder Problemlösungen erreicht werden, für die es bislang lediglich komplex aufgebaute Produkte oder Verfahren gibt.

Insofern stellt die Erfindung die Nachhaltigkeit und den sorgsamen Umgang erdölgebundener Rohstoffe und anderer Ressourcen bei der Produktentwicklung sicher.

Die vorliegende Erfindung vereinfacht die Herstellung dieser Produkte und Verfahren erheblich und weist je nach Zusammensetzung und Produkt folgende Vorteile auf:
Natürliche, dauerhaft verfügbare und kostengünstige bzw. preisstabile Rohstoffe
Hitze, Feuchte und Alterungsbeständigkeit
Emissionsfreiheit und Geruchsneutralität
Brandresistenz
Verwendung und Nutzung bestehender Herstell- und Verarbeitungstechnologien
Einfache Be- und Verarbeitung des Produktes
Verträglichkeit mit anderen Werkstoffen und Komponenten
Geschlossener Recyclingkreislauf, unkomplizierte Wiederverwertung bei geringst möglichem
   Eigenschafts- und Wertverlust der eingesetzten Rohstoffe
Geringes Gewicht
Akustisch wirksam
Wärme- und kälteisolierend
Steifigkeit, Formstabilität
Wasser- und feuchtigkeitsresistent
Verrottbarkeit, einfache und umweltverträgliche Entsorgung
Optische Ansprüche wie Farbe, Muster, Oberflächen etc.
Geruchsneutral, auch unter Klimabelastung
Gegenüber Pilz- und Schimmelbefall resistent
Hohe Kombinierbarkeit mit anderen Werkstoffen und Materialien

Bei dem erfindungsgemäßen Formteil handelt sich um beliebige Arten und Formen eines Werkstückes, eines formgebenden Bauteils in einem Fahrzeug, eines Verbundsstoffs, Baumaterials, eines Verkleidungsteils für Gebäude oder Gebäudebestandteile oder eines Isolierstoffs handelt.

## Patentansprüche

1. Verfahren zur Herstellung von Formmassen für die Herstellung, Behandlung, Beschichtung, Ausrüstung oder Veredelung eines Körpers, umfassend den Schritt des Vermischens eines Bindemittels, bestehend aus:
einer Mischung aus Milch- und/oder pflanzlichem Protein sowie Kalk oder einem Kalkersatzmittel, ausgewählt aus der aus NaOH-Lösung, KOH-Lösung, Natriumhydrogencarbonat, Ammoniumhydrogencarbonat, Pottasche und Holzasche bestehenden Gruppe,
mit wenigstens einem Füllstoff, ausgewählt aus der Gruppe bestehend aus:
natürlich vorkommenden anorganischen Stoffen, Mineralien, geschlossenzelligen Trägern, offenzelligen oder porösen Produkten, Blähstoffen, Granulaten, Faser- und Faserverbundstoffen sowie expandierten Kunststoffen,
zu einer Formmasse, wobei das Bindemittel vor Zugabe des Füllstoffs aufgeschäumt wird.

2. Verfahren nach Anspruch 1, **dadurch gekennzeichnet, dass** als Füllstoff Blähglimmer (Vermiculit), Glasschaum, Blähglas, Blähton, Blähschiefer, Vulkanasche, Flugasche, Knochenasche, Knochenkohle, Bims, Gasbeton, Sand, Schotter, Ton, Glasfasern, Steinmehle, Metallfasern, Metallwolle und/oder Metallspäne eingesetzt werden.

3. Verfahren nach einem der vorhergehenden Ansprüche, **dadurch gekennzeichnet, dass** als Faser- und Faserverbundstoffe regenerative und synthetische Fasern wie Hanf, Jute, Leinen, Abaca, Sisal, Baumwolle, Kapok, Kopf- und Tier-Haare (Schafwolle, Rinder- und Pferdehaare usw.), Kokos, Holz, Bambus, Gras, Stroh, Zellstoff, Schilf, Brennnessel, Seide, Viskosefasern, Glas- und Mineralfasern, PET (Polyethylenterephthalat)-Fasern, PA- (Polyamid-) Fasern, Polyacryl-Fasern, PP- (Polypropylen-) Fasern, Zellulosefasern, Polystyrol-Schaum, PU- (Polyurethan-) Schaum und/oder Gummi-Schaumstoffe eingesetzt werden.

4. Verfahren nach einem der vorhergehenden Ansprüche, **dadurch gekennzeichnet, dass** als expandierte Kunststoffe Polystyrol oder Polyurethan eingesetzt werden.

5. Verfahren nach einem der vorhergehenden Ansprüche, **dadurch gekennzeichnet, dass** zusätzlich ein oder mehrere Kautschuke wie Naturlatex (NR), synthetische Kautschuksorten wie Acrylnitril-Butadien-Kautschuk (NBR), Styrol-Butadien-Kautschuk (SBR), Chloropren-Kautschuk (CR) oder Butadien-Kautschuk (BR) vermischt werden.

6. Verfahren nach einem der vorhergehenden Ansprüche, **dadurch gekennzeichnet, dass** als Kalk Sumpfkalk oder Löschkalk eingesetzt wird.

7. Verfahren nach einem der vorhergehenden Ansprüche, **dadurch gekennzeichnet, dass** das Mischungsverhältnis zwischen Milchprotein und Kalk und/oder einer 10%igen Kalkersatzstofflösung wenigstens 4:1 beträgt

8. Verfahren nach einem der vorhergehenden Ansprüche, **dadurch gekennzeichnet, dass** das Milchprotein in Form von Milch, Milchpulver, Jogurt, Quark, Magerkäse oder anderen Milchprodukten mit einem Fettgehalt von nicht mehr als 10%, vorzugsweise von nicht mehr als 5%, oder in Form von reinem Kasein eingesetzt wird.

9. Verfahren nach einem der vorhergehenden Ansprüche, **dadurch gekennzeichnet, dass** der Füllstoff in Pulverform oder als Granulat eingesetzt wird.

10. Verfahren nach einem der vorangegangenen Ansprüche, **dadurch gekennzeichnet, dass** zur Schaumstabilisierung gelöste Gelatine oder Algensubstrat eingesetzt wird.

11. Verfahren nach einem der vorhergehenden Ansprüche, **dadurch gekennzeichnet, dass** der Mischung ein oder mehrere Zuschlagstoffe, ausgewählt aus der aus trocknenden Ölen, Kurzfasern, Naturfasern, Mineralfasern, Metallspänen, Metallfasern, synthetischen Fasern, Faserstoffen, Splittern, Bruchstücken, Farbstoffen und Pigmenten bestehenden Gruppe, zugesetzt werden.

12. Verfahren zur Herstellung eines Formteils, umfassend ein Verfahren nach einem der Ansprüche 1 bis 11, **dadurch gekennzeichnet, dass** eine Formgebung der Formmasse zu einem Formteil erfolgt.

13. Formteil, hergestellt nach einem Verfahren gemäß Anspruch 12.

14. Formteil nach Anspruch 13, **dadurch gekennzeichnet, dass** es sich um ein Werkstück, ein formgebendes Bauteil in einem Fahrzeug, einen Verbundstoff, Baumaterial, ein Verkleidungsteil für Gebäude oder Gebäudebestandteile, einen Füllstoff, eine Beschichtung oder einen Isolierstoff handelt.

15. Zusammensetzung für die Herstellung, Behandlung, Beschichtung, Ausrüstung oder Veredelung eines Körpers, umfassend:
ein aufgeschäumtes Bindemittel, bestehend aus einer Mischung aus Milch- und/oder pflanzlichem Protein sowie Kalk oder einem Kalkersatzmittel, ausgewählt aus der aus NaOH-Lösung, KOH-Lösung, Natriumhydrogencarbonat, Ammoniumhydrogencarbonat, Pottasche und Holzasche bestehenden Gruppe, und
wenigstens einen, zum Vermischen mit dem aufgeschäumten Bindemittel bestimmten Füllstoff, ausgewählt aus der aus natürlich vorkommenden anorganischen Stoffen, Mineralien, geschlossenzelligen Trägern, offenzelligen oder porösen Produkten, Blähstoffen, Granulaten, Faser- und Faserverbundstoffen sowie expandierten Kunststoffen bestehenden Gruppe,
wobei der wenigstens eine Füllstoff gegebenenfalls in Pulverform vorliegt.

16. Zusammensetzung nach Anspruch 15, **dadurch gekennzeichnet, dass** in der Zusammensetzung außerdem gelöste Gelatine oder Algensubstrat zur Schaumstabilisierung enthalten ist und/oder Zuschlagstoffe, ausgewählt aus der aus trocknenden Ölen, Kurzfasern, Naturfasern, Mineralfasern, Metallspänen, Metallfasern, synthetischen Fasern, Faserstoffen, Splittern, Bruchstücken, Farbstoffen und Pigmenten bestehenden Gruppe enthalten sind.

17. Verwendung einer Zusammensetzung nach Anspruch 15 oder 16
für die Herstellung von Baustoffplatten oder Leichtbauplatten;
für die Erzeugung einer Antirutschbeschichtung auf einer Oberfläche;
als Verbundschicht, Isolationsschicht oder Füllschicht in einem mehrschichtigen Körper;
für die Erzeugung einer Brandschutzschicht auf einem Körper;
für die Erzeugung einer dekorativen Oberfläche wie Furnieren, Nutzschichten oder Funktionsschichten an einer Oberfläche;
für die Veredelung und Ausrüstung von textilen Gebilden und offenzelligen Schaumstoffen;
für die Herstellung von geometrisch geformten Bauteilen, Bauteilgruppen und Verkleidungsteilen für Fahrzeuge, Gebrauchsgegenstände und Sicherheitssysteme;
für die Herstellung von Papier, Pappe und Kartonagen; oder
für die Ausrüstung und Veredelung von Kunststoffprodukten über Kompoundierungsprozesse.

## Claims

1. A method for producing molding compositions for producing, treating, coating, harnessing, or refining a body, comprising a step of mixing a binder consisting of:
a mixture of milk and/or plant protein and lime or a lime substitute selected from the group consisting of NaOH solution, KOH solution, sodium hydrogen carbonate, ammonium hydrogen carbonate, potassium carbonate, and wood ash,
and at least one filler selected from the group consisting of:
naturally occurring inorganic substances, minerals, closed-cell carriers, open-cell or porous products, expanding agents, granules, fiber materials and fiber composite materials as well as expanded plastics,
to obtain a molding composition, said binder being foamed before adding said filler.

2. The method according to claim 1, **characterized in that** expanded mica (vermiculite), glass foam, expanded glass, expanded clay, expanded slate, volcanic ash, fly ash, bone ash, bone black, pumice, foamed concrete, sand, gravel, clay, glass fibers, rock flour, metal fibers, metal wool, and/or metal flakes is/are used as said filler(s).

3. The method according to any one of the preceding claims, **characterized in that** regenerative and synthetic fibers such as hemp, jute, linen, abaca, sisal, cotton, kapok, human and animal hair (sheep wool, cattle and horse hair, etc.), coconut, wood, bamboo, grass, straw, pulp, reed, stinging nettle, silk, viscose fibers, glass and mineral fibers, PET (polyethylene terephthalate) fibers, PA (polyamide) fibers, polyacrylic fibers, PP (polypropylene) fibers, cellulose fibers, polystyrene foam, PU (polyurethane) foam, and/or rubber foams are used as said fiber materials and fiber composite materials.

4. The method according to any one of the preceding claims, **characterized in that** polystyrene or polyurethane is used as said expanded plastic.

5. The method according to any one of the preceding claims, **characterized in that**, additionally, one or more rubbers, such as natural latex (NR), synthetic rubber types, such as acrylonitrile butadiene rubber (NBR), styrene butadiene rubber (SBR), chloroprene rubber (CR), or butadiene rubber (BR), are admixed.

6. The method according to any one of the preceding claims, **characterized in that** pit lime or slack lime is used as said lime.

7. The method according to any one of the preceding claims, **characterized in that** said milk protein and said lime and/or a 10% solution of lime substitute are mixed in a ratio of at least 4:1.

8. The method according to any one of the preceding claims, **characterized in that** said milk protein is used in the form of milk, milk powder, yoghurt, quark, low-fat cheese, or other milk products having a fat content of not more than 10%, preferably of not more than 5%, or in the form of pure casein.

9. The method according to any one of the preceding claims, **characterized in that** said filler is used in the form of powder or granules.

10. The method according to any one of the preceding claims, **characterized in that** dissolved gelatin or algae substrate is used as a foam stabilizer.

11. The method according to any one of the preceding claims, **characterized in that** one or more additives selected from the group consisting of drying oils, short fibers, natural fibers, mineral fibers, metal flakes, metal fibers, synthetic fibers, fibrous materials, chips, splinters, dyes, and pigments are added to the mixture.

12. A method for producing a molded article, comprising the method according to any one of the claims 1 to 11, **characterized in that** said molding composition is molded into a molded article.

13. A molded article, produced according to the method according to claim 12.

14. The molded article according to claim 13, **characterized in that** it is a work piece, a shaping component in a vehicle, a composite material, a construction material, a piece of cladding for buildings or parts of buildings, a filler, a coating, or an insulating material.

15. A composition for producing, treating, coating, harnessing or refining a body, comprising:
a foamed binder consisting of a mixture of milk and/or plant protein and lime or a lime substitute selected from the group consisting of NaOH solution, KOH solution, sodium hydrogen carbonate, ammonium hydrogen carbonate, potassium carbonate, and wood ash,
and at least one filler to be mixed with said foamed binder, said filler being selected from the group consisting of naturally occurring inorganic substances, minerals, closed-cell carriers, open-cell or porous products, expanding agents, granules, fiber materials and fiber composite materials as well as expanded plastics,
wherein said at least one filler is optionally present in the form of a powder.

16. The composition according to claim 15, **characterized in that** said composition further contains dissolved gelatin or algae substrate to be used as a foam stabilizer and/or one or more additives selected from the group consisting of drying oils, short fibers, natural fibers, mineral fibers, metal flakes, metal fibers, synthetic fibers, fibrous materials, chips, splinters, dyes, and pigments.

17. A use of the composition according to claim 15 or 16
for producing building boards or light building boards;
for producing anti-slip coatings on a surface;
as composite layer, insulating layer, or filling layer in a multi-layer body;
for producing a fire-protection layer on a body;
for producing a decorative surface, such as veneers, wear layers, or functional layer on a surface;
for refining and harnessing textile fabrics and open-cell foamed materials;
for producing components, component groups, and trims for vehicles, articles of daily use, and security systems;
for producing paper, carton, and carton board; or
for harnessing and refining plastic products in compounding processes.

## Revendications

1. Procédé pour la fabrication de masses à mouler pour la fabrication, le traitement, le revêtement, l'équipement ou l'affinage d'un corps, comprenant une étape de mélange d'un liant, ce dernier comprenant
un mélange de protéine de lait et/ou végétale et de chaux ou d'un remplaçant de chaux choisi parmi le groupe composé de solution de NaOH, solution de KOH, hydrogénocarbonate de sodium, hydrogénocarbonate d'ammonium, potasse et cendre de bois,
avec au moins un agent de remplissage, choisi parmi le groupe composé de substances inorganiques d'origine naturelle, minéraux, supports à alvéoles fermées, produits à alvéoles ouvertes ou poreux, substances gonflées, granulats, matières en fibres et matières en fibres composites et produits plastiques expansés, pour obtenir une masse à mouler, le liant étant moussé avant l'addition de l'agent de remplissage.

2. Procédé selon la revendication 1, **caractérisé en ce que** les suivants sont employés comme agents de remplissage :
du mica expansé (vermiculite), de la mousse de verre, du verre expansé, de l'argile expansée, de l'ardoise expansée, de la cendre de volcan, des cendres volantes, des cendres d'os, de la pierre ponce, du béton-gaz, de la sable, des graviers, de l'argile, des fibres de verre, de la poudre de pierre, des fibres métalliques, de la laine métallique et/ou des copeaux métalliques.

3. Procédé selon l'une quelconque des revendications précédentes, **caractérisé en ce que** des fibres renouvelables et synthétiques, dont le chanvre, la jute, le lin, l'abaca, le sisal, le coton, le kapok, les cheveux humains, les poils d'animaux (laine de mouton, poil de bovin, poil de cheval), le coco, le bois, le bambou, l'herbe, la paille, la cellulose, le roseau, l'ortie, la soie, des fibres de viscose, les fibres de verre et minérales, les fibres de PET (polyethylènethéréphthalate), les fibres de PA (polyamide), les fibres polyacryliques, les fibres de PP (polypropylène), les fibres de cellulose, la mousse de polystyrène, la mousse de PU (polyuréthane) et/ou les mousses caoutchouc sont utilisées comme matière en fibres et matière en fibres composites.

4. Procédé selon l'une quelconque des revendications précédentes, **caractérisé en ce que** le polystyrène ou le polyuréthane sont employés comme produits plastiques expansés.

5. Procédé selon l'une quelconque des revendications précédentes, **caractérisé en ce que**, de plus, un ou plusieurs types de caoutchouc, comme le latex naturel (NR), des types de caoutchouc synthétiques, comme le caoutchouc butadiène-acrylonitrile (NBR), le caoutchouc butadiène-styrène (SBR), le caoutchouc chloroprène (CR) ou le caoutchouc butadiène (BR), sont mélangés.

6. Procédé selon l'une quelconque des revendications précédentes, **caractérisé en ce que** de la pâte de chaux ou de la chaux éteinte peuvent être utilisées comme chaux.

7. Procédé selon l'une quelconque des revendications précédentes, **caractérisé en ce que** le rapport de mélange entre la protéine de lait et la chaux et/ou une solution à 10 % d'un remplaçant de chaux est au moins de 4 à 1.

8. Procédé selon l'une quelconque des revendications précédentes, **caractérisé en ce que** la protéine de lait est employée sous forme de lait, poudre de lait, yaourt, fromage blanc, fromage maigre ou d'autres produits laitiers avec une teneur en matière grasse de pas plus que 10 %, de préférence pas plus que 5 %, ou sous forme de caséine pure.

9. Procédé selon l'une quelconque des revendications précédentes, **caractérisé en ce que** l'agent de remplissage est employé sous forme de poudre ou de granulat.

10. Procédé selon l'une quelconque des revendications précédentes, **caractérisé en ce que** de la gélatine dissoute ou du substrat d'algues sont employés pour stabiliser la mousse.

11. Procédé selon l'une quelconque des revendications précédentes, **caractérisé en ce qu'**un ou plusieurs agrégats, choisis parmi le groupe composé d'huiles siccatives, fibres courtes, fibres naturelles, fibres minérales, copeaux métalliques, fibres métalliques, fibres synthétiques, matières fibreuses, éclats, fragments, colorants et pigments, sont ajoutés au mélange.

12. Procédé de fabrication pour une pièce moulée, comprenant un procédé selon l'une quelconque des revendications 1 à 11, **caractérisé en ce qu'**une masse à mouler est moulée pour obtenir une pièce moulée.

13. Pièce moulée, fabriquée en conformité avec un procédé selon la revendication 12.

14. Pièce moulée selon la revendication 13, **caractérisé en ce qu'**il s'agit d'une pièce à usiner, un élément conformateur d'un véhicule, un matériau composite, un matériau de construction, une pièce de revêtement pour bâtiments ou éléments de bâtiment, un agent de remplissage, un revêtement ou un isolant.

15. Composition pour la fabrication, le traitement, le revêtement, l'équipement ou l'affinage d'un corps, comprenant les suivants :
un liant moussé, composé d'un mélange de protéine de lait et/ou végétale et de chaux ou d'un remplaçant de chaux choisi parmi le groupe composé de solution de NaOH, solution de KOH, hydrogénocarbonate de sodium, hydrogénocarbonate d'ammonium, potasse et cendre de bois, et au moins un agent de remplissage, destiné à être mélangé avec le liant moussé, choisi parmi le groupe composé de substances inorganiques d'origine naturelle, minéraux, supports à alvéoles fermées, produits à alvéoles ouvertes ou poreux, substances gonflées, granulats, matières en fibres et matières en fibres composites et produits plastiques expansés,
l'au moins un agent de remplissage étant éventuellement présent sous forme de poudre.

16. Composition selon la revendication 15, **caractérisée en ce que** la composition comprend, de plus, de la gélatine dissoute ou du substrat d'algues, étant employés pour stabiliser la mousse, et/ou des agrégats, choisis parmi le groupe composé d'huiles siccatives, fibres courtes, fibres naturelles, fibres minérales, copeaux métalliques, fibres métalliques, fibres synthétiques, matières fibreuses, éclats, fragments, colorants et pigments.

17. Utilisation d'une composition selon les revendications 15 ou 16
pour la fabrication de panneaux de construction ou de panneaux de construction légers ;
pour la production d'un revêtement antidérapant sur une surface ;
comme couche composite, isolante ou de remplissage dans un corps multi-couche ;
pour la production d'une couche anti-feu sur un corps ;
pour la production de surfaces décoratives, comme de placage, de couches d'usure ou de couches fonctionnelle sur une surface ;
pour l'affinage et l'équipement de structures textiles et de mousses à alvéoles ouvertes ;
pour la fabrication d'éléments de construction aux formes géométriques, d'ensembles d'éléments de construction et d'éléments de revêtement pour véhicules, d'objets d'usage courant et de systèmes de sécurité ;
pour la fabrication de papier et de cartons ; et
pour l'équipement et l'affinage de produits en plastique par des procédés de compoundage.
